Europäisches Patentamt

European Patent Office

Office européen des brevets

(19)

(11) **EP 1 571 081 B1**

(12) **FASCICULE DE BREVET EUROPEEN**

(45) Date de publication et mention
de la délivrance du brevet:
**04.10.2006 Bulletin 2006/40**

(51) Int Cl.:
***B64D 27/26*** *(2006.01)*

(21) Numéro de dépôt: **05101606.1**

(22) Date de dépôt: **02.03.2005**

(54) **Système de montage interposé entre un moteur d'aéronef et une structure rigide d'un mât d'accrochage fixé sous une voilure de cet aéronef**

Aufhängevorrichtung eines Flugzeugtriebwerks an einem Flügelpylon

Aircraft engine attachment onto a wing pylon

(84) Etats contractants désignés:
**AT BE BG CH CY CZ DE DK EE ES FI FR GB GR HU IE IS IT LI LT LU MC NL PL PT RO SE SI SK TR**

(30) Priorité: **04.03.2004 FR 0450445**

(43) Date de publication de la demande:
**07.09.2005 Bulletin 2005/36**

(73) Titulaire: **AIRBUS France**
**31060 Toulouse (FR)**

(72) Inventeur: **Marche, Hervé**
**31120, Roquettes (FR)**

(74) Mandataire: **Poulin, Gérard et al**
**BREVALEX**
**3, rue du Docteur Lancereaux**
**75008 Paris (FR)**

(56) Documents cités:
| | |
|---|---|
| **EP-A- 0 522 688** | **FR-A- 2 698 848** |
| **US-A- 4 022 018** | **US-A- 4 458 863** |
| **US-A- 5 319 922** | **US-A- 5 385 013** |
| **US-A- 5 746 391** | **US-A- 6 126 110** |

EP 1 571 081 B1

**Description**

**DOMAINE TECHNIQUE**

La présente invention se rapporte de façon générale à un système de montage interposé entre un moteur d'aéronef et une structure rigide d'un mât d'accrochage fixé sous une voilure de cet aéronef.

L'invention se rapporte également à un mât d'accrochage d'un moteur d'aéronef muni d'un tel système de montage.

Le système de montage et le mât d'accrochage indiqués ci-dessus peuvent être utilisés sur tout type d'aéronef, et plus particulièrement sur des aéronefs équipés de moteurs à soufflantes de diamètre important.

**ETAT DE LA TECHNIQUE ANTERIEURE**

Un mât d'accrochage d'un aéronef est prévu pour constituer l'interface de liaison entre un moteur et une voilure de l'aéronef. Il permet de transmettre à la structure de cet aéronef les efforts générés par son moteur associé, et autorise également le cheminement du carburant, de l'électricité, de l'hydraulique et de l'air entre le moteur et l'aéronef.

Afin d'assurer la transmission des efforts, le mât comporte une structure rigide, par exemple du type « caisson », c'est-à-dire formée par l'assemblage de longerons supérieurs et inférieurs raccordés entre-eux par l'intermédiaire de nervures transversales.

D'autre part, le mât est muni d'un système de montage interposé entre le moteur et la structure rigide du mât, ce système comportant globalement au moins deux attaches, généralement une attache avant et une attache arrière, ainsi qu'un dispositif de reprise des efforts de poussée générés par le moteur. Ce dernier prend par exemple la forme de deux bielles latérales raccordées d'une part à une partie avant du carter central du moteur, et d'autre part à l'attache arrière.

De la même façon, le mât d'accrochage comporte également un second système de montage interposé entre le mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

De façon connue de l'homme du métier, dans certaines conditions de vol et principalement au décollage, un appui aérodynamique important se crée sur l'entrée d'air du moteur, provoquant ainsi une flexion longitudinale conséquente de ce dernier, à savoir une flexion résultant d'un couple exercé selon un axe transversal de l'aéronef.

Lorsqu'une telle flexion longitudinale survient, deux cas peuvent se présenter. Dans un premier cas où aucune précaution particulière n'a été prise en ce qui concerne la flexion observée, on rencontre alors inévitablement des frottements élevés d'une part entre les pales tournantes de la soufflante et le carter de soufflante, et d'autre part entre les pales tournantes de compresseur et de turbine et le carter central du moteur. La conséquence principale de ces frottements réside alors dans une usure prématurée du moteur, qui est naturellement néfaste à la durée de vie de celui-ci, ainsi qu'à ses performances. Dans un second cas où l'on a prévu des jeux de fonctionnement adaptés de manière à ce qu'il n'y ait quasiment jamais de contact causé par la flexion longitudinale, le rendement du moteur est alors fortement diminué.

A ce titre, il est indiqué que la flexion longitudinale du moteur rencontrée durant le décollage est accentuée lorsque l'attache avant du système de montage est solidaire du carter central de ce moteur, dans la mesure où l'entrée d'air, la soufflante et le carter de soufflante sont alors situés en porte-à-faux. De plus, le fait que cette flexion résulte d'un appui aérodynamique sur l'entrée d'air implique qu'elle est bien entendu d'autant plus importante que le diamètre de la soufflante est grand.

Néanmoins, cette configuration spécifique où l'attache avant est située au niveau du carter central du moteur, à proximité de son centre de gravité, est pourtant très avantageuse en ce sens qu'elle facilite la conception de l'ensemble du mât d'accrochage, la conception de celui-ci et particulièrement celle de ses attaches étant effectivement fonction des charges appliquées au centre de gravité du moteur.

De l'art antérieur, on connaît également les documents US-A-5 319 922, US-A-5 385 013, US-A-5 746 391 et US-A-4 022 018 divulguant des moyens aptes à s'opposer à la déformation du moteur, et plus précisément à la flexion longitudinale de celui-ci. Néanmoins, ces moyens sont de conception complexes, et de ce fait non totalement optimisés.

Pour lutter contre la déformation longitudinale élevée rencontrée durant le décollage, il est généralement prévu de concevoir et de dimensionner en conséquence les attaches ainsi que le dispositif de reprise de poussée du système de montage.

Par conséquent, en raison de l'importance de l'appui aérodynamique rencontré, il est donc nécessaire de largement surdimensionner et complexifier les attaches susmentionnées ainsi que le dispositif de reprise lorsqu'un tel dispositif est prévu, par rapport à une configuration dans laquelle ces éléments seraient tout à fait adaptés pour contrer les effets néfastes des efforts rencontrés durant les phases de croisière de l'aéronef.

EP 1 571 081 B1

Naturellement, le surdimensionnement requis du système de montage et son augmentation de masse associée rendent l'aéronef d'autant moins optimisé que les phases de décollage représentent une part infime du cycle de vie d'un aéronef, en comparaison de la part occupée par les phases de croisière.

**EXPOSÉ DE L'INVENTION**

L'invention a donc pour but de proposer un ensemble moteur pour aéronef remédiant au moins partiellement aux inconvénients mentionnés ci-dessus relatifs aux réalisations de l'art antérieur.

Pour ce faire, l'invention a pour objet un ensemble moteur pour aéronef tel que défini dans la revendication 1.

Avantageusement, l'agencement proposé par la présente invention permet de concevoir les attaches ainsi que le dispositif de reprise de poussée sans avoir à se préoccuper de l'appui aérodynamique élevé exercé sur l'entrée d'air du moteur lors des phases de décollage de l'aéronef, mais uniquement en prenant en compte les charges plus faibles rencontrées lors des phases de croisière.

En effet, la flexion longitudinale du moteur provoquée par cet appui aérodynamique est contrée et limitée par les moyens additionnels du type bielle prévus à cet effet, qui sont par ailleurs actifs exclusivement lorsque le moteur a atteint le niveau de déformation prédéterminé, ce niveau prédéterminé étant bien entendu retenu pour traduire le fait que l'aéronef se trouve dans une phase de décollage, ou dans une phase analogue telle que celle rencontrée en vol lors de fortes turbulences.

Ainsi, les attaches et le dispositif de reprise de poussée étant réalisés en fonction des charges rencontrées lors des phases de croisière de l'aéronef, leur dimensionnement peut donc être réduit par rapport à celui rencontré dans l'art antérieur décrit ci-dessus, au même titre que leur masse associée.

Par ailleurs, le fait de prévoir deux chemins d'efforts distincts, à savoir un premier chemin d'efforts durant les phases de croisière et un second chemin d'efforts constitué par la/les bielles venant s'ajouter au premier uniquement lors des phases de décollage, les attaches et le dispositif de reprise des efforts de poussée constituant le premier chemin d'effort sont alors avantageusement spécifiquement et exclusivement adaptés pour répondre au cas de charge particulier des phases de croisière.

A ce titre, la flexion longitudinale du moteur durant les phases de croisière de l'aéronef étant entièrement provoquée par un couple d'axe transversal émanant des efforts de poussée générés par ce moteur, il est alors possible de prévoir des réalisations dans lesquelles le dispositif de reprise des efforts de poussée annule totalement ce couple afin d'éviter toute flexion longitudinale du moteur pendant ces phases de croisière. De cette façon, durant les phases de croisière, aucune usure prématurée n'est rencontrée au niveau des éléments constitutifs du moteur, et la durée de vie ainsi que les performances de ce dernier ne sont par conséquent plus affaiblies.

De manière avantageuse, il est précisé que dans la mesure où les moyens additionnels du type bielle aptes à s'opposer à la flexion longitudinale du moteur restent inactifs en dehors des phases de décollage, le système de montage selon l'invention peut donc rester isostatique durant la croisière.

En positionnant judicieusement cette/ces bielles entre le carter de soufflante et la structure rigide du mât dans le but de créer le second chemin d'efforts, il est alors possible de prévoir une attache avant solidarisée au carter central du moteur à proximité du centre de gravité de celui-ci, sans que cela n'ait de conséquence sur la flexion longitudinale du moteur rencontrée durant les phases de décollage.

Comme indiqué précédemment, les moyens additionnels comportent au moins une bielle apte à s'opposer à la flexion longitudinale du moteur, chaque bielle étant raccordée d'une part à la structure rigide du mât et d'autre part à un carter de soufflante du moteur, de manière à être sollicitée qu'à partir du niveau de déformation prédéterminé de ce moteur.

Pour ce faire, on peut prévoir que chaque bielle est raccordée à l'aide d'une attache souple au carter de soufflante et/ou à la structure rigide du mât. Ainsi, il est clair que pour chaque bielle du système de montage, l'attache souple associée est conçue de manière à ce que le moteur puisse fléchir longitudinalement sans que la bielle concernée ne soit sollicitée mécaniquement, et ce jusqu'à ce que le niveau de déformation prédéterminé du moteur soit atteint. De plus, une fois que ce niveau de déformation prédéterminé du moteur est atteint et que l'attache souple est donc elle-même déformée au maximum, la bielle commence alors à être sollicitée mécaniquement, et peut par conséquent s'opposer à la flexion longitudinale de ce moteur.

Naturellement, la/les attaches souples pourraient être remplacées par des systèmes à ressort ou analogues, permettant d'obtenir le même effet technique, sans sortir du cadre de l'invention.

De manière préférée, chaque bielle est raccordée à une partie supérieure arrière du carter de soufflante du moteur, cet emplacement étant effectivement tout à fait approprié pour s'opposer à la flexion longitudinale du moteur.

Lorsqu'une telle solution de bielle est retenue pour réaliser les moyens additionnels aptes à s'opposer à la flexion longitudinale du moteur, on peut alors alternativement prévoir que les moyens additionnels comportent une ou deux bielles.

Dans un premier mode de réalisation préféré de la présente invention, le dispositif de reprise des efforts de

3

poussée comporte deux bielles latérales disposées de part et d'autre d'un carter central du moteur, chaque bielle latérale étant raccordée d'une part à une partie avant du carter central du moteur, et d'autre part à l'une des attaches du système, de préférence à l'attache avant.

Dans ce premier mode de réalisation préféré, tout comme dans les autres modes de réalisation préférés qui vont être présentés ci-après, il est noté que les moyens additionnels du système de montage sont de préférence réalisés conformément à l'une ou l'autre des solutions à une ou deux bielles.

Selon un second mode de réalisation préféré de la présente invention, le dispositif de reprise des efforts de poussée comprend un palonnier disposant d'un bras supérieur et de deux bras inférieurs latéraux, les bras supérieur et inférieurs latéraux étant solidaires et pourvus respectivement d'une extrémité supérieure ainsi que de deux extrémités inférieures latérales du palonnier, les deux extrémités inférieures latérales étant placées de façon à être traversées par un plan horizontal passant par un axe longitudinal du moteur, le dispositif de reprise étant également muni de deux ferrures situées de part et d'autre du moteur et comprenant chacune une extrémité avant également traversée par le plan horizontal passant par l'axe longitudinal du moteur et solidarisée à une partie avant d'un carter central du moteur, ainsi qu'une extrémité arrière raccordée à l'une des deux extrémités inférieures latérales du palonnier. De plus, le palonnier est également raccordé à l'attache avant du système de montage, ainsi qu'à la structure rigide du mât d'accrochage par l'intermédiaire de son extrémité supérieure.

Avantageusement, le dispositif de reprise des efforts de poussée proposé dans ce second mode de réalisation préféré améliore considérablement la reprise de ces efforts par rapport à celle observée avec la solution de bielles latérales, puisque ce dispositif permet d'annuler entièrement le couple d'axe transversal appliqué au moteur et lié à ces mêmes efforts de poussée.

Par conséquent, durant les phases de croisière de l'aéronef, la présence d'un tel dispositif de reprise implique que le moteur ne subit aucune flexion longitudinale. De cette façon, aucune usure prématurée n'est rencontrée au niveau des éléments constitutifs du moteur, et la durée de vie ainsi que les performances de ce dernier ne sont donc plus affaiblies.

La suppression de la flexion longitudinale du moteur due aux efforts de poussée est tout d'abord obtenue par le fait que la reprise de ces efforts s'effectue au niveau du plan horizontal passant par l'axe longitudinal du moteur, ceci étant effectivement très avantageux dans la mesure où les efforts de poussée sont créés sur l'axe longitudinal de ce moteur.

L'agencement proposé est en effet tel que les deux extrémités inférieures latérales du palonnier se situent au niveau de ce plan horizontal passant par l'axe longitudinal du moteur, afin de pouvoir être raccordées aux ferrures également placées au niveau de ce même plan horizontal, et raccordées à la partie avant du carter central du moteur.

De plus, les efforts de poussée repris initialement sur le plan horizontal passant par l'axe longitudinal du moteur, par l'intermédiaire des ferrures et des extrémités inférieures latérales du palonnier, sont ensuite transportés vers le haut tout le long de ce palonnier à trois bras travaillant en flexion. Les efforts de poussée transportés par le palonnier se répartissent alors en deux efforts axiaux de sens opposés et orientés selon la direction longitudinale de l'aéronef, l'un étant transmis à l'attache avant sur laquelle le palonnier est raccordé, et l'autre étant transmis à la structure rigide du mât sur laquelle est raccordée l'extrémité supérieure de ce même palonnier.

Enfin, il est indiqué que de façon avantageuse, durant les phases de croisière de l'aéronef, le système de montage est un système isostatique, ce qui facilite grandement sa conception.

Préférentiellement, le palonnier est raccordé à l'attache avant par l'intermédiaire d'au moins un axe rotulé orienté selon une direction transversale de l'aéronef. C'est par conséquent sur cet axe que s'exerce l'un des deux efforts axiaux de sens opposés et orientés selon la direction longitudinale de l'aéronef, avant d'être transmis à l'attache avant.

Toujours de façon préférée, l'extrémité supérieure du bras supérieur est raccordée à la structure rigide du mât d'accrochage à l'aide d'une bielle, par exemple orientée sensiblement selon une direction longitudinale de l'aéronef. De cette manière, on peut prévoir que l'extrémité supérieure du bras supérieur est raccordée à une extrémité avant de la bielle par l'intermédiaire d'au moins un axe rotulé orienté selon une direction transversale de l'aéronef. Avec un tel agencement, c'est donc sur cet axe que s'exerce l'autre des deux efforts axiaux de sens opposés et orientés selon la direction longitudinale de l'aéronef, avant d'être transmis à la structure rigide du mât.

Enfin, dans ce second mode de réalisation préféré, chacune des extrémités arrière des deux ferrures solidaires de la partie avant du carter central du moteur est raccordée à l'une des deux extrémités inférieures latérales du palonnier à l'aide d'une biellette.

Dans des troisième et quatrième modes de réalisation préférés de la présente invention, le dispositif de reprise des efforts de poussée comprend deux vérins latéraux disposés de part et d'autre du moteur, chaque vérin disposant d'une tige dont une extrémité arrière est raccordée à l'une des attaches, de préférence l'attache avant, et dont une extrémité avant est un piston situé à l'intérieur d'une chambre solidaire d'une partie avant d'un carter central du moteur, la chambre comportant un compartiment avant et un compartiment arrière séparés par le piston. De plus, le dispositif de reprise comporte en outre un dispositif à piston hydraulique comportant un piston solidaire de l'attache avant et situé à l'intérieur d'une chambre solidaire de la partie avant du carter central du moteur, la chambre comportant un compartiment avant et un compartiment arrière séparés par le piston, le compartiment avant de la chambre du dispositif à piston hydraulique étant connecté hydrauliquement aux compartiments arrière des vérins latéraux.

Ici aussi, le dispositif de reprise des efforts de poussée est tel qu'il améliore considérablement la reprise de ces efforts par rapport à celle observée avec la solution de bielles latérales, puisque ce dispositif peut être facilement conçu pour annuler entièrement le couple d'axe transversal lié à ces mêmes efforts de poussée et appliqué au moteur, en dimensionnant de façon appropriée les deux vérins latéraux ainsi que le dispositif à piston hydraulique. En effet, comme cela sera exposé de façon détaillée ci-dessous, les deux vérins latéraux et le dispositif à piston hydraulique remplissent alors grossièrement une fonction de système à palonnier vertical dont les efforts transmis au moteur permettent d'annuler intégralement le couple d'axe transversal durant les phases de croisière, quelle que soit les efforts de poussée rencontrés.

Au même titre que dans le second mode de réalisation préféré de la présente invention, durant les phases de croisière de l'aéronef, la présence d'un tel dispositif de reprise implique que le moteur ne subit pas de flexion longitudinale. Aucune usure prématurée n'est donc rencontrée au niveau des éléments constitutifs du moteur, et la durée de vie ainsi que les performances de ce dernier ne sont par conséquent plus affaiblies.

De plus, ici encore, il est indiqué que le système de montage est un système isostatique durant les phases de croisière de l'aéronef.

De préférence, dans ces troisième et quatrième modes de réalisation préférés, le compartiment arrière de la chambre du dispositif à piston hydraulique est connecté hydrauliquement aux compartiments avant des vérins latéraux.

De façon avantageuse, la connexion susmentionnée permet également d'annuler le couple d'axe transversal et la flexion longitudinale du moteur lorsque celui-ci fonctionne en mode inversion de poussée (de l'anglais « reverse »).

Préférentiellement, les compartiments avant des deux vérins latéraux sont connectés hydrauliquement, et les compartiments arrière de ces deux mêmes vérins sont également connectés hydrauliquement. Par conséquent, les connexions effectuées assurent que durant les phases de croisière, les efforts transitant par chacune des deux tiges des vérins latéraux sont sensiblement égaux, sans que l'on ait besoin d'adjoindre un palonnier raccordant les deux tiges à l'attache avant ou arrière, comme cela était pourtant nécessaire dans l'art antérieur. Ainsi, l'effet de palonnier horizontal obtenu à l'aide des vérins latéraux permet avantageusement au dispositif de reprise des efforts de poussée de présenter un encombrement global affaibli par rapport à celui rencontré antérieurement.

De préférence, les chambres des vérins latéraux et du dispositif à piston hydraulique sont pratiquées à l'intérieur de la partie avant du carter central du moteur, ce qui réduit encore davantage l'encombrement du système de montage.

De manière préférée, l'extrémité arrière de chacune des deux tiges est connectée à l'attache avant. Néanmoins, elle pourrait bien entendu être connectée à l'attache arrière, sans sortir du cadre de l'invention.

Dans le troisième mode de réalisation préféré, le compartiment avant de la chambre du dispositif à piston hydraulique est connecté hydrauliquement uniquement aux compartiments arrière des vérins latéraux.

En revanche, dans le quatrième mode de réalisation préféré, le compartiment avant du dispositif à piston hydraulique est également connecté hydrauliquement à une alimentation hydraulique haute pression et dispose d'au moins un orifice de fuite dont l'accès est apte à être autorisé/interdit par un organe solidaire du piston, en fonction de la pression hydraulique régnant à l'intérieur du compartiment avant, ainsi qu'en fonction des efforts de poussée générés par le moteur.

De la même manière, le compartiment arrière du dispositif à piston hydraulique peut également être connecté hydrauliquement à une alimentation hydraulique haute pression et disposer d'au moins un orifice de fuite dont l'accès est apte à être autorisé/interdit par un organe solidaire du piston, en fonction de la pression hydraulique régnant à l'intérieur du compartiment arrière, ainsi qu'en fonction des efforts de contre-poussée générés par le moteur. Ainsi, avec un tel agencement, le fonctionnement du dispositif de reprise des efforts de poussée est également assuré lorsque le moteur est en mode inversion de poussée.

Dans l'ensemble des modes de réalisation préférés présentés ci-dessus, l'attache avant est de préférence solidaire d'une partie avant d'un carter central du moteur et d'une extrémité avant d'une pyramide constituant une partie avant de la structure rigide du mât, et l'attache arrière est de préférence solidaire d'une partie arrière du carter central du moteur et de la structure rigide du mât. De cette façon, cette disposition des attaches permet avantageusement à l'attache avant de se situer à proximité du centre de gravité du moteur.

D'autres avantages et caractéristiques de l'invention apparaîtront dans la description détaillée non limitative ci-dessous.

## BRÈVE DESCRIPTION DES DESSINS

Cette description sera faite au regard des dessins annexés parmi lesquels ;

- la figure 1 représente une vue en perspective d'un système de montage interposé entre un moteur d'aéronef et une structure rigide d'un mât d'accrochage fixé sous une voilure de cet aéronef, selon un premier mode de réalisation préféré de la présente invention ;

- la figure 2a représente une vue partielle latérale du système de montage de la figure 1, lorsque le moteur ne subit aucune flexion longitudinale ;
- la figure 2b représente une vue partielle latérale du système de montage de la figure 1, lorsque le moteur subit une légère flexion longitudinale due aux efforts de poussée rencontrés durant une phase de croisière ;
- la figure 2c représente une vue partielle latérale du système de montage de la figure 1, lorsque le moteur subit une flexion longitudinale significative due notamment à l'appui aérodynamique rencontré durant une phase de décollage ou analogue ;
- la figure 3 représente une vue en perspective d'un système de montage interposé entre un moteur d'aéronef et une structure rigide d'un mât d'accrochage fixé sous une voilure de cet aéronef, selon une alternative du premier mode de réalisation préféré de la présente invention ;
- la figure 4 représente une vue en perspective d'un système de montage interposé entre un moteur d'aéronef et une structure rigide d'un mât d'accrochage fixé sous une voilure de cet aéronef, selon un second mode de réalisation préféré de la présente invention ;
- la figure 5 représente une vue en perspective d'un système de montage interposé entre un moteur d'aéronef et une structure rigide d'un mât d'accrochage fixé sous une voilure de cet aéronef, selon un troisième mode de réalisation préféré de la présente invention ;
- la figure 6 représente une vue partielle de côté de la figure 5 ;
- la figure 7 représente une vue en coupe prise le long de la ligne VII-VII de la figure 6 ;
- la figure 8 représente un diagramme de force montrant l'ensemble des efforts s'exerçant sur le moteur auquel est associé le dispositif de reprise des efforts de poussée de la figure 5, lorsque l'aéronef est dans une phase de croisière ; et
- la figure 9 représente une vue similaire à celle de la figure 6, lorsque le système de montage interposé entre un moteur d'aéronef et une structure rigide d'un mât d'accrochage fixé sous une voilure de cet aéronef est réalisé selon un quatrième mode de réalisation préféré de la présente invention.

## EXPOSÉ DÉTAILLÉ DE MODES DE RÉALISATION PRÉFÉRÉS

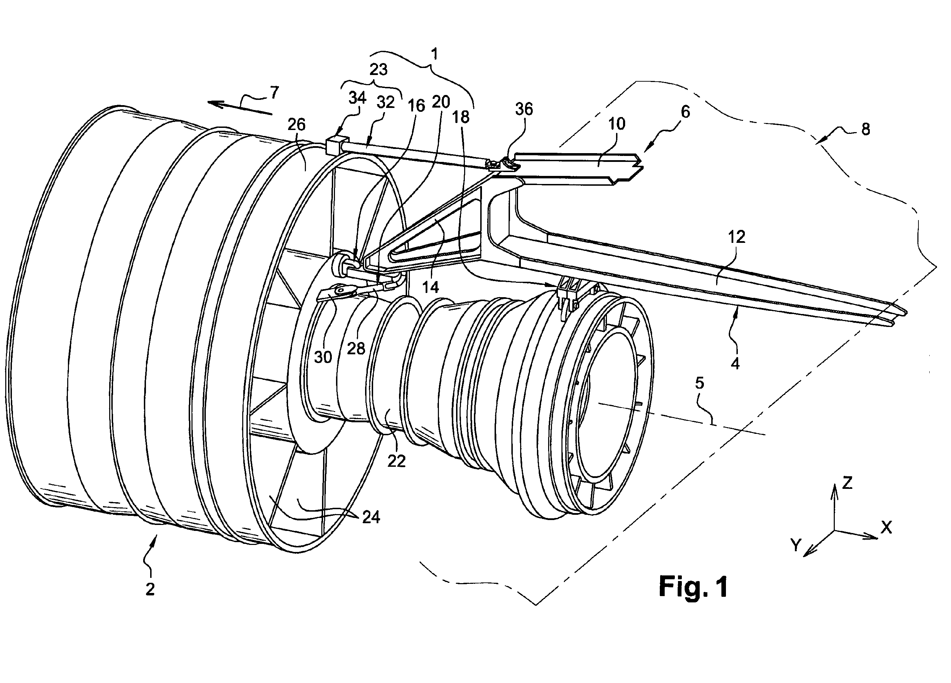

Il est tout d'abord indiqué que sur les figures 1 à 9 représentant quatre modes de réalisation préférés de la présente invention, les éléments portant les mêmes références numériques correspondent à des éléments identiques ou similaires.

En référence à la figure 1, on voit un système de montage 1 selon un premier mode de réalisation préféré de la présente invention, ce système de montage 1 étant interposé entre un moteur 2 d'aéronef et une structure rigide 4 d'un mât d'accrochage 6 fixé sous une aile d'aéronef représentée uniquement schématiquement pour des raisons évidentes de clarté, et désignée de façon générale par la référence numérique 8. Il est noté que le système de montage 1 représenté sur cette figure 1 est adapté pour coopérer avec un turboréacteur 2, mais il pourrait bien entendu s'agir d'un système conçu pour suspendre tout autre type de moteur, tel qu'un turbopropulseur, sans sortir du cadre de l'invention.

Dans toute la description qui va suivre, par convention, on appelle X la direction parallèle à un axe longitudinal 5 du moteur 2, Y la direction orientée transversalement par rapport à l'aéronef, et Z la direction verticale, ces trois directions étant orthogonales entre-elles.

D'autre part, les termes « avant » et « arrière » sont à considérer par rapport à une direction d'avancement de l'aéronef rencontrée suite à la poussée exercée par les moteurs 2, cette direction étant représentée schématiquement par la flèche 7.

Sur la figure 1, on peut voir que seule une portion de la structure rigide 4 du mât d'accrochage 6 a été représentée, accompagnée évidemment du système de montage 1 faisant partie intégrante de ce mât 6, ce dernier étant également objet de la présente invention.

Les autres éléments constitutifs non-représentés de ce mât 6, tels que les moyens d'accrochage de la structure rigide 4 sous la voilure 8 de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

De façon connue, il est indiqué que la structure rigide 4 est globalement réalisée par l'assemblage de longerons inférieurs 12 et supérieurs 10 raccordés entre-eux par une pluralité de nervures transversales (non représentées). De plus, une partie avant de cette structure rigide 4 est constituée par une pyramide 14, également connue de l'homme du métier et prenant donc la forme d'une structure partant d'une base et s'étendant vers un sommet en allant vers l'avant et en se rapprochant de l'axe longitudinal 5 du moteur 2.

Dans le premier mode de réalisation préféré de la présente invention représenté sur la figure 1, le système de montage 1 comporte tout d'abord une attache avant 16, une attache arrière 18, un dispositif 20 de reprise des efforts de poussée générés par le moteur 2, et des moyens additionnels 23 aptes à s'opposer à la flexion longitudinale du moteur 2, ces moyens additionnels 23 étant conçus pour être sollicités qu'à partir d'un niveau de déformation prédéterminé de ce moteur 2. A cet égard, il est précisé que les attaches avant 16 et arrière 18 sont du type classiques et connues de l'homme du métier. Par conséquent, elles seront uniquement décrites succinctement, à titre indicatif et non limitatif.

En ce qui concerne l'attache avant 16, celle-ci est d'une part solidaire d'une extrémité avant de la pyramide 14 de la structure rigide 4, c'est-à-dire son sommet, et d'autre part solidaire d'une partie avant d'un carter central 22 du moteur 2. Plus précisément, l'attache avant 16 pénètre dans une portion du carter central 22 qui porte des pales fixes 24 reliant un carter de soufflante 26 du moteur 2 à ce même carter central 22.

Cette attache avant 16 comprend généralement une rotule (non référencée), également appelée « monoball », qui pénètre à l'intérieur du carter central 22 de manière à pourvoir assurer la reprise des efforts selon la direction verticale Z ainsi que selon la direction transversale Y.

En outre, l'attache arrière 18 est d'une part solidaire d'une partie arrière du carter central 22, et d'autre part solidaire d'un longeron inférieur 12 de la structure rigide 4 du mât 6. L'attache arrière classique 18 représentée sur la figure 1 est globalement constituée de manilles et de ferrures, et assure la reprise des efforts selon les directions Y et Z, ainsi que la reprise du moment s'exerçant selon la direction X.

Dans ce premier mode de réalisation préféré de la présente invention, le dispositif 20 de reprise des efforts de poussée générés par le moteur 2 est ici réalisé à l'aide de deux bielles courtes 28 (une seule étant visible sur la figure 1) disposées de part et d'autre du carter central 22, symétriquement par rapport à un plan vertical passant par l'axe longitudinal 5 du moteur 2. Chacune de ces deux bielles 28 est d'une part raccordée à l'attache avant 16, par exemple par l'intermédiaire d'un palonnier (non référencé), et d'autre part reliée à la partie avant du carter central 22 à l'aide de ferrures 30. Naturellement, il aurait également été possible de prévoir un dispositif de reprise des efforts de poussée comportant des bielles longues, à savoir non plus raccordées à l'attache avant 16, mais à l'attache arrière 18.

De manière connue et à titre indicatif, il est noté que ce dispositif de reprise 20 permet de limiter la flexion longitudinale du moteur 2 résultant d'un couple d'axe transversal lié aux efforts de poussée. Ainsi, durant les phases de croisière de l'aéronef où la flexion longitudinale du moteur 2 est exclusivement due aux efforts de poussée, les bielles 28 sont sollicitée mécaniquement et permettent d'engendrer qu'un niveau de déformation longitudinale limité de ce moteur 2.

Comme cela va apparaître plus clairement ci-après, il est noté que ce niveau de déformation longitudinale limité observé durant les phases de croisière est inférieur à un niveau de déformation prédéterminé, à partir duquel des bielles supplémentaires vont également être sollicitées afin de constituer un second chemin d'efforts, dont la fonction est de s'opposer à la flexion longitudinale du moteur 2.

Effectivement, la particularité de ce premier mode de réalisation préféré réside dans le fait que les moyens additionnels 23 comportent une bielle 32, apte à s'opposer à la flexion longitudinale du moteur 2 lorsque celui-ci a atteint le niveau de déformation prédéterminé, traduisant le fait que l'aéronef se trouve dans une phase de décollage ou analogue, et non pas dans une phase de croisière. Néanmoins, cette bielle 32 est naturellement inactive durant les phases de croisière de l'aéronef, à savoir lorsque la flexion longitudinale du moteur 2 est faible, ce qui permet au système de montage 1 de rester isostatique durant toute la croisière.

A cet égard, il est précisé que le premier chemin d'efforts, constitué par les éléments 16, 18 et 20 du système de montage 1, est naturellement tout à fait capable de supporter les efforts transmis lors de déformations du moteur 2 pouvant aller au moins jusqu'au niveau de déformation prédéterminé.

Toujours en référence à la figure 1, la bielle 32 dispose d'une extrémité avant raccordée à une partie supérieure arrière du carter de soufflante 26, et plus précisément à une partie arrière de ce carter 26, au niveau d'une portion d'extrémité supérieure et extérieure de celui-ci. En outre, cette bielle 32 dispose également d'une extrémité arrière raccordée à la structure rigide 4 du mât 6, de préférence sur une partie avant d'un longeron supérieur 10, au niveau d'une jonction entre la pyramide 14 et le reste de la structure rigide 4, comme cela apparaît clairement sur la figure 1. De cette manière, la bielle 32 se situe de préférence dans le plan fictif vertical passant par l'axe longitudinal 5 du moteur 2, et est sensiblement orientée selon la direction longitudinale X. De façon générale, on peut prévoir que la bielle 32 se situe sensiblement dans le prolongement du longeron supérieur 10, à savoir dans un plan défini par ce dernier.

Pour que la bielle 32 ne soit pas sollicitée mécaniquement durant les phases de croisière, mais uniquement lorsque le moteur 2 a atteint le niveau de déformation prédéterminé, les moyens additionnels 23 comprennent également une attache souple 34 (de l'anglais « soft mount ») interposée entre le carter de soufflante 26 et l'extrémité avant de cette même bielle 32. En revanche, l'extrémité arrière de la bielle 32 est quant à elle simplement montée sur une ferrure 36 solidaire du longeron supérieur 10 de la structure rigide 4, par exemple à l'aide d'une rotule (non référencée).

Bien entendu, il serait possible de prévoir également une attache souple entre l'extrémité arrière de la bielle 32 et la structure rigide 4, ou encore uniquement à ce même emplacement et non plus au niveau de l'extrémité avant, sans sortir du cadre de l'invention.

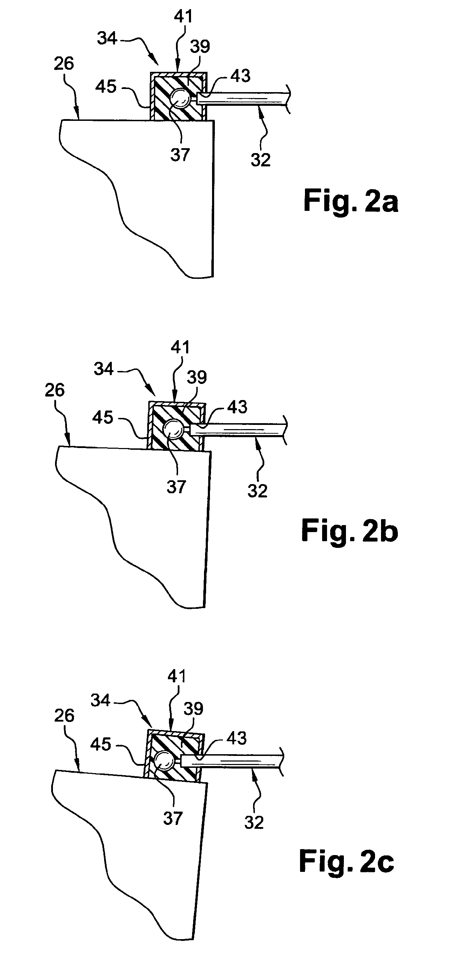

En référence plus spécifiquement à la figure 2a, on peut notamment apercevoir l'attache souple 34 lorsque le moteur 2 ne subit aucune flexion longitudinale. Dans un tel cas, on voit que l'extrémité avant de la bielle 32, de préférence en forme de boule 37, est noyée dans un matériau élastique 39 tel que du caoutchouc, ce matériau 39 remplissant un espace délimité par un corps creux rigide 41 solidaire du carter de soufflante 26, le corps creux 41 étant par exemple en forme de cube. De plus, comme on peut le voir sur cette figure 2a, la bielle 32 traverse le corps 41 au niveau d'une ouverture 43 de celui-ci, afin de permettre un mouvement relatif entre l'extrémité avant de la bielle 32 et le corps creux rigide 41 de l'attache souple 34. Comme cela apparaît évident au vu de ce qui précède, le corps 41 est placé précisément sur la partie arrière du carter de soufflante 26, au niveau d'une portion d'extrémité supérieure et extérieure de celui-ci.

En référence à la figure 2b représentant de façon schématique un état dans lequel l'aéronef est dans une phase de croisière, et donc dans lequel le moteur 2 subit une légère flexion longitudinale due aux efforts de poussée, on peut apercevoir que la légère inclinaison du carter de soufflante 26 implique que la bielle 32 pénètre un peu plus à l'intérieur de l'attache souple 34, en direction d'une paroi avant 45 du corps creux rigide 41 solidaire de ce carter 26. Naturellement, ce déplacement de la bielle 32 par rapport au corps 41 peut être obtenu grâce à la déformation du matériau élastique 39. Dans cette configuration de la figure 2b, dans la mesure où le matériau élastique 39 est susceptible de se déformer davantage, la bielle 32 n'est pas encore sollicitée mécaniquement, mais ne fait que se déplacer à l'intérieur de son attache associée 34.

En référence à présent à la figure 2c représentant de façon schématique un état dans lequel l'aéronef est dans une phase de décollage ou analogue, et donc dans lequel le moteur 2 subit une flexion longitudinale non-négligeable correspondant au niveau de déformation prédéterminé susmentionné, on peut voir que l'inclinaison significative du carter de soufflante 26 implique que la bielle 32 pénètre au maximum à l'intérieur de l'attache souple 34, en direction de la paroi avant 45 du corps 41. En d'autres termes, le matériau élastique 39 prisonnier à l'intérieur du corps 41 ne peut se déformer davantage, ce qui implique qu'à partir de ce niveau de déformation prédéterminé du moteur 2 et pour des déformations supérieures, la bielle 32 va effectivement être sollicitée mécaniquement, de façon à former le second chemin d'efforts venant s'ajouter au premier chemin d'efforts indiqué précédemment.

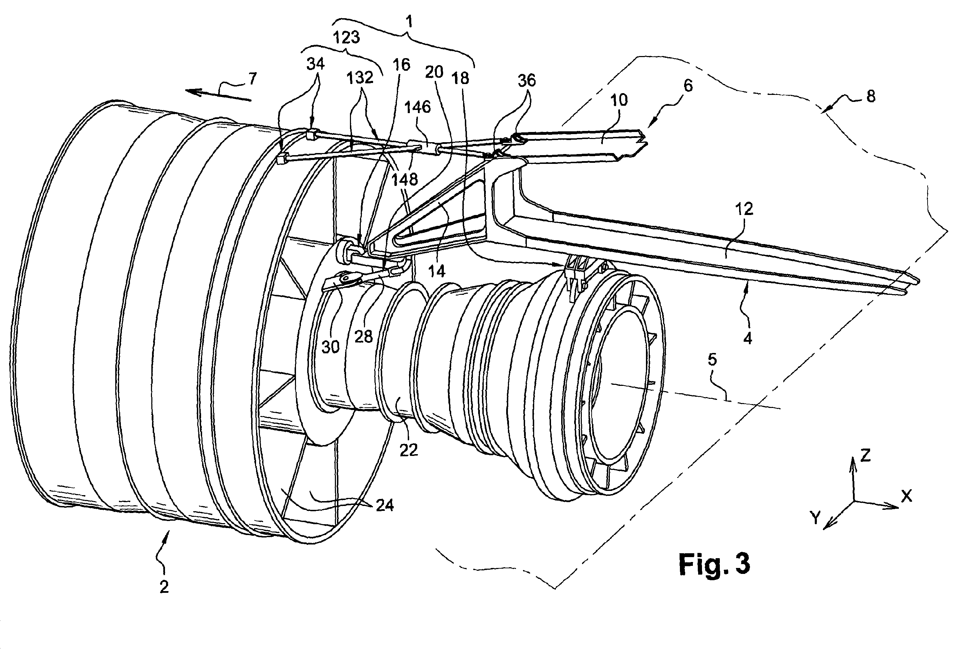

En référence à la figure 3, on voit un système de montage 1 selon une alternative du premier mode de réalisation préféré de la présente invention.

On peut s'apercevoir que dans cette alternative, seuls les moyens additionnels 123 destinés à s'opposer à la flexion longitudinale du moteur 2 à partir du certain niveau de déformation de celui-ci, diffèrent par rapport au moyens 23 proposés dans la réalisation décrite en référence à la figure 1.

En effet, les moyens additionnels 123 ne comportent plus une unique bielle 32, mais deux bielles 132 dont les extrémités avant respectives sont également raccordées à la partie supérieure arrière du carter de soufflante 26 par l'intermédiaire de deux attaches souples 34, et dont les extrémités arrière respectives sont aussi raccordées à la structure rigide 4 par l'intermédiaire de deux ferrures 36, de préférence sur une partie avant d'un longeron supérieur 10, au niveau d'une jonction entre la pyramide 14 et le reste de la structure rigide 4, comme cela apparaît clairement sur la figure 3.

Les deux bielles 132 sont alors préférentiellement situées dans un plan sensiblement horizontal, et agencées symétriquement par rapport au plan vertical passant par l'axe longitudinal 5 du moteur 2. Ici encore, de façon générale, on peut prévoir que les deux bielles 132 se situent dans un plan défini par le longeron supérieur 10.

Par ailleurs, comme le montre clairement la figure 3, les deux bielles 132 peuvent être placées de manière à former une croix. Pour ce faire, l'une des deux bielles 132 dispose alors d'une portion renforcée 146, sensiblement centrale, de diamètre important, percée d'un trou traversant 148 laissant passer l'autre des deux bielles 132.

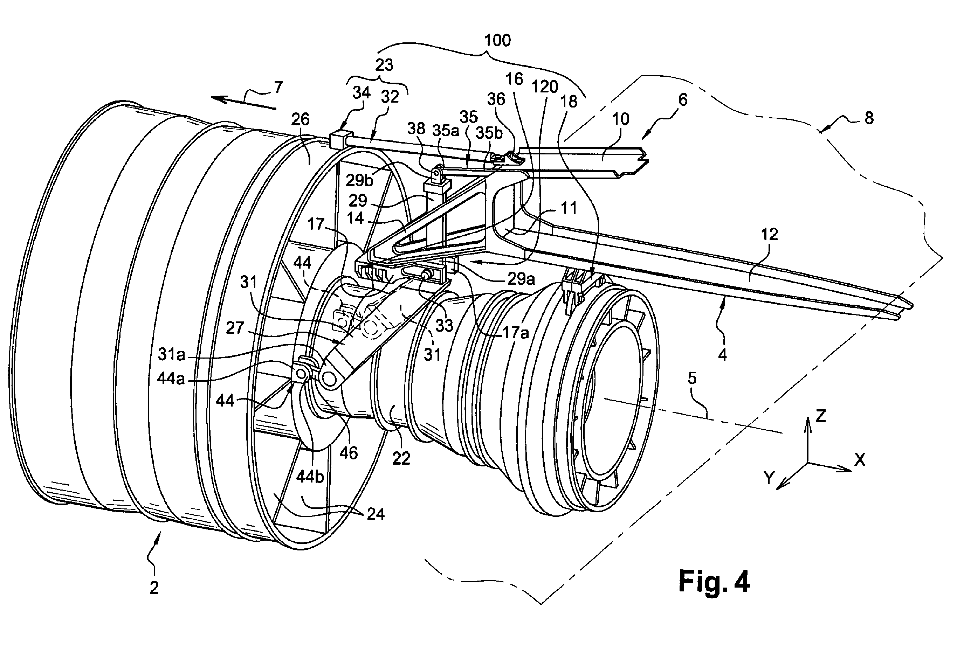

En référence à présent à la figure 4, on voit un système de montage 100 selon un second mode de réalisation préféré de la présente invention, ce système de montage 100 incorporant les moyens additionnels 23 décrits ci-dessus. Naturellement, il est noté que dans ce second mode de réalisation préféré, les moyens additionnels 23 pourraient être remplacés par les moyens additionnels 123 correspondant à l'alternative décrite en référence à la figure 3, sans sortir du cadre de l'invention.

La particularité de ce second mode de réalisation préféré réside dans le fait que le système de montage 100 comporte un dispositif 120 de reprise des efforts de poussée conçu pour annuler totalement la flexion longitudinale du moteur 2 résultant d'un couple d'axe transversal lié à ces efforts de poussée. Ainsi, durant les phases de croisière de l'aéronef où la flexion longitudinale du moteur 2 est normalement exclusivement due aux efforts de poussée, aucune déformation longitudinale de ce moteur 2 n'est ainsi rencontrée. Dans la mesure où il ne se produit aucune flexion longitudinale du moteur 2 durant les phases de croisière, le niveau de déformation prédéterminé du moteur 2, qui sera réglé par calculs itératifs et au-delà duquel les moyens additionnels 23 constituent un second chemin d'efforts s'opposant à la flexion longitudinale, peut donc être sensiblement abaissé par rapport à celui retenu dans le premier mode de réalisation préféré.

Il est précisé qu'un plan vertical XZ passant par l'axe longitudinal 5 du moteur 2 constitue un plan de symétrie pour le dispositif de reprise 120.

Comme on peut clairement l'apercevoir sur la figure 4, ce dispositif 120 comprend principalement un palonnier 27 prenant globalement la forme d'une fourche, et disposant donc de trois bras 29,31 solidaires les uns aux autres. Parmi ces trois bras, on compte tout d'abord un bras supérieur 29 orienté selon la direction verticale Z, perpendiculairement à l'axe longitudinal 5 du moteur 2. Par conséquent, ce bras supérieur 29 est droit et agencé dans le plan vertical XZ passant par l'axe longitudinal 5, au-dessus du carter central 22.

Par ailleurs, on compte également deux bras inférieurs latéraux 31, symétriques par rapport au plan vertical XZ passant par l'axe longitudinal 5 du moteur 2, et étant de forme courbe de manière à pouvoir être disposés correctement autour du carter central 22. De plus, ces bras inférieurs 31 s'écartent d'un plan horizontal XY passant par l'axe longitudinal 5 en allant vers l'arrière, comme cela est visible sur la figure 4. Ainsi, les deux bras inférieurs 31 s'étendent vers le bas au moins jusqu'au plan horizontal XY passant par l'axe longitudinal 5, et vers le haut jusqu'au plan vertical XZ passant par ce même axe. A cet égard, ils forment ensemble grossièrement un demi-anneau situé dans un plan incliné par rapport aux directions longitudinale X et verticale Z, et non-incliné par rapport à la direction transversale Y.

A titre d'exemple indicatif, le palonnier 27 peut être réalisé à l'aide de deux pièces rapportées l'une sur l'autre et symétriques par rapport au plan vertical XZ passant par l'axe 5.

Pour effectuer la jonction entre le palonnier 27 et l'attache avant 16, un corps d'attache avant 17 de cette dernière comporte une extrémité arrière 17a à double-tête dont chacune des têtes (non référencées) s'étend selon la direction longitudinale X, et entre lesquelles est située une extrémité inférieure 29a du bras supérieur 29.

De cette façon, un axe rotulé 33 ou rotule, orienté selon la direction transversale Y, traverse les deux têtes de l'extrémité arrière 17a ainsi que l'extrémité inférieure 29a coopérant avec une rotule de l'axe 33, ces éléments 17a et 29a étant bien entendu pourvus d'orifices autorisant un tel montage.

D'autre part, le bras supérieur 29 comprend également une extrémité supérieure 29b en forme de double-tête dont chacune des têtes (non référencées) s'étend selon la direction verticale Z, et entre lesquelles est située une extrémité avant 35a d'une bielle 35 établissant une jonction rotulée entre la structure rigide 4 et le palonnier 27. A titre indicatif, il est noté que cette extrémité 29b constitue également l'extrémité supérieure du palonnier 27.

De cette façon, un axe rotulé 38 ou rotule, orienté selon la direction transversale Y, traverse les deux têtes de l'extrémité supérieure 29b ainsi que l'extrémité avant 35a coopérant avec une rotule de l'axe 38, ces éléments 29b et 35a étant bien entendu ici aussi pourvus d'orifices autorisant un tel montage.

La bielle 35 s'étend sensiblement selon la direction longitudinale X jusqu'à une extrémité arrière 35b située entre les deux têtes d'une ferrure à double-tête (non représentée), solidaire de la base de la pyramide 14 de la structure rigide 4. En d'autres termes, l'extrémité arrière 35b est raccordée à la base de la pyramide 14, qui est constituée par une nervure transversale 11 située la plus en avant de la structure rigide 4. Ici encore, on peut prévoir un axe rotulé orienté selon la direction Y qui traverse les deux têtes de la ferrure s'étendant selon la direction longitudinale X, ainsi que l'extrémité arrière 35b de la bielle 35.

Naturellement, la bielle 35 peut s'étendre selon une autre direction que la direction X, et est de préférence agencée parallèlement et au-dessous de la bielle 32 des moyens additionnels 23, cette bielle 32 étant quant à elle préférentiellement parallèle au longeron supérieur 10.

Comme on peut l'apercevoir sur la figure 4, le bras supérieur 29 traverse cette pyramide 14, ce qui contribue avantageusement à obtenir un système de montage 1 de faible encombrement.

A présent en ce qui concerne les bras inférieurs latéraux 31 ainsi que leurs éléments associés qui seront présentés ci-dessous, il est noté qu'un seul de ces deux bras 31 sera entièrement décrit, dans la mesure où ils sont identiques et symétriques par rapport au plan fictif vertical XZ passant par l'axe longitudinal 5.

Ainsi, chaque bras 31 comprend une extrémité inférieure 31a qui se situe au niveau du plan fictif horizontal XY passant par l'axe longitudinal 5, et qui en d'autres termes est traversée par ce même plan afin de pouvoir reprendre les efforts de poussée à l'endroit où ils sont créés. Toujours à titre indicatif, il est noté que cette extrémité 31a constitue également une extrémité inférieure latérale du palonnier 27.

Une ferrure 44, de préférence à double-tête, est associée au bras 31 et s'étend selon la direction longitudinale X. Cette ferrure 44 comporte une extrémité avant 44a traversée par le plan horizontal XY passant par l'axe 5, et étant solidarisée à la partie avant du carter central 22. En outre, elle comporte une extrémité arrière 44b raccordée à l'extrémité inférieure latérale 31a du bras 31, cette extrémité arrière 44b étant par conséquent également traversée par le plan horizontal XY passant par l'axe 5.

Dans ce second mode de réalisation préféré décrit, pour assurer la jonction entre l'extrémité arrière 44b de la ferrure à double-tête 44 et l'extrémité inférieure latérale 31a du bras 31, il est utilisé une biellette 46, s'étendant selon la direction X dans le plan horizontal XY passant par l'axe 5. Par conséquent, la biellette 46 est par exemple montée de façon articulée entre les deux têtes (non référencées) de l'extrémité arrière 44b de la ferrure 44, et également montée de façon articulée sur l'extrémité inférieure latérale 31a du bras 31.

Néanmoins, si la solution de biellette est préférée, il aurait également pu être utilisé des manilles ou toute autre solution analogue, sans sortir du cadre de l'invention.

Avec une telle configuration, lors des phases de croisière de l'aéronef et en raison des efforts de poussée générés par le moteur 2, les deux extrémités inférieures latérales 31a subissent respectivement deux efforts axiaux orientés vers l'avant selon la direction X. De plus, l'extrémité inférieure 29a du bras supérieur 29 est soumise à un effort axial orienté vers l'arrière selon la direction X, tandis que l'extrémité supérieure 29b de ce bras supérieur 29 subit un effort axial orienté vers l'avant selon cette même direction. Ainsi, ces efforts axiaux sont tels que le moment d'axe transversal lié aux efforts de poussée et appliqué au moteur 2 est nul, de sorte que ce dernier n'est alors soumis à aucune flexion longitudinale durant les phases de croisière.

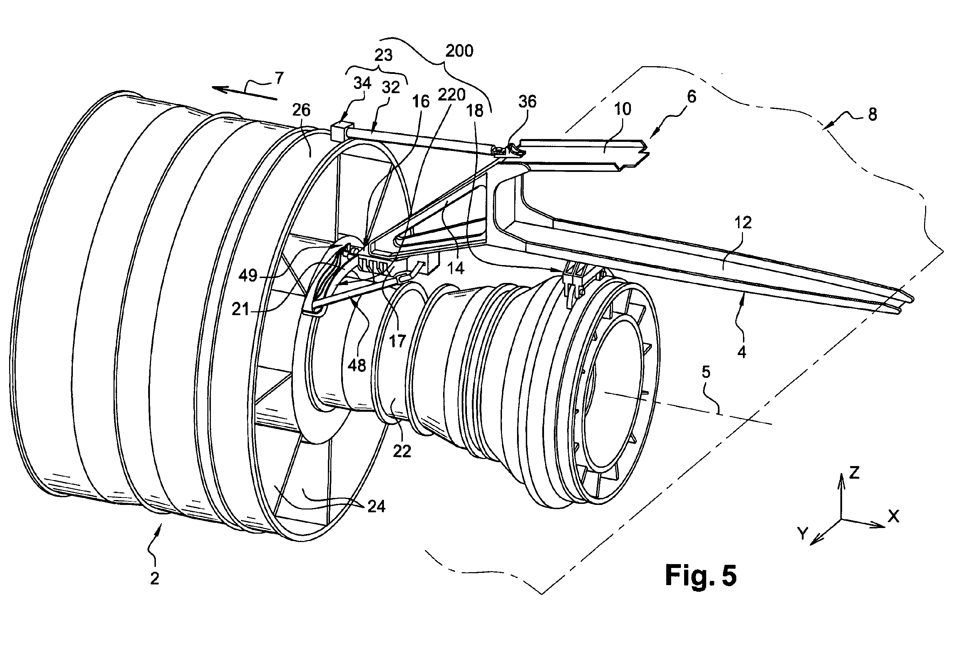

En référence à présent aux figures 5 à 8, on voit un système de montage 200 selon un troisième mode de réalisation préféré de la présente invention, ce système de montage 200 incorporant les moyens additionnels 23 décrits ci-dessus. Ici aussi, les moyens additionnels 23 pourraient être remplacés par les moyens additionnels 123 correspondant à l'alternative décrite en référence à la figure 3, sans sortir du cadre de l'invention.

Tout comme dans le second mode de réalisation préféré, la particularité de ce troisième mode de réalisation préféré réside dans le fait que le système de montage 200 comporte un dispositif 220 de reprise des efforts de poussée conçu pour annuler totalement la flexion longitudinale du moteur 2 résultant d'un couple d'axe transversal lié à ces efforts de poussée. Ainsi, durant les phases de croisière de l'aéronef où la flexion longitudinale du moteur 2 est normalement exclusivement due aux efforts de poussée, aucune déformation longitudinale de ce moteur 2 n'est ainsi rencontrée.

Comme décrit précédemment, l'attache avant 16 est d'une part solidaire de l'extrémité avant de la pyramide 14 de la structure rigide 4, c'est-à-dire son sommet, et d'autre part solidaire de la partie avant d'un carter central 22 du moteur 2. Plus précisément, dans ce troisième mode de réalisation préféré, l'attache avant 16 pénètre dans une portion radiale supérieure 21 du carter central 22 située à proximité et à l'arrière des pales fixes 24, cette portion 21 étant additionnelle par rapport au carter central 22 des figures 1 à 4.

En outre, on peut apercevoir sur la figure 5 que la portion radiale supérieure 21, située au niveau de la partie avant du carter central 22 et représentée de façon coupée pour des raisons de clarté, fait saillie radialement vers l'extérieur par rapport à une partie plus arrière du carter 22, et s'étend par exemple sur un secteur angulaire d'environ 90°.

Il est précisé qu'un plan vertical XZ passant par l'axe longitudinal 5 du moteur 2 constitue un plan de symétrie pour le dispositif de reprise 220.

Comme on peut l'apercevoir sur la figure 5, ce dispositif 220 comprend principalement deux vérins latéraux 48 (un seul d'entre-eux étant visible) disposés de part et d'autre du carter central 22, ainsi qu'un dispositif à piston hydraulique 49 situé globalement dans le prolongement avant de l'attache avant 16, au droit de la rotule 19.

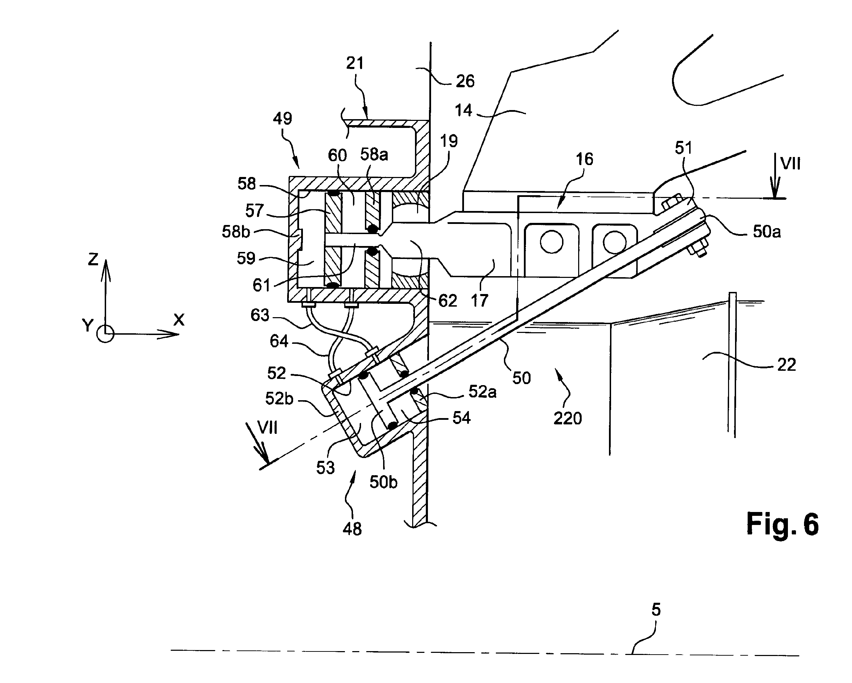

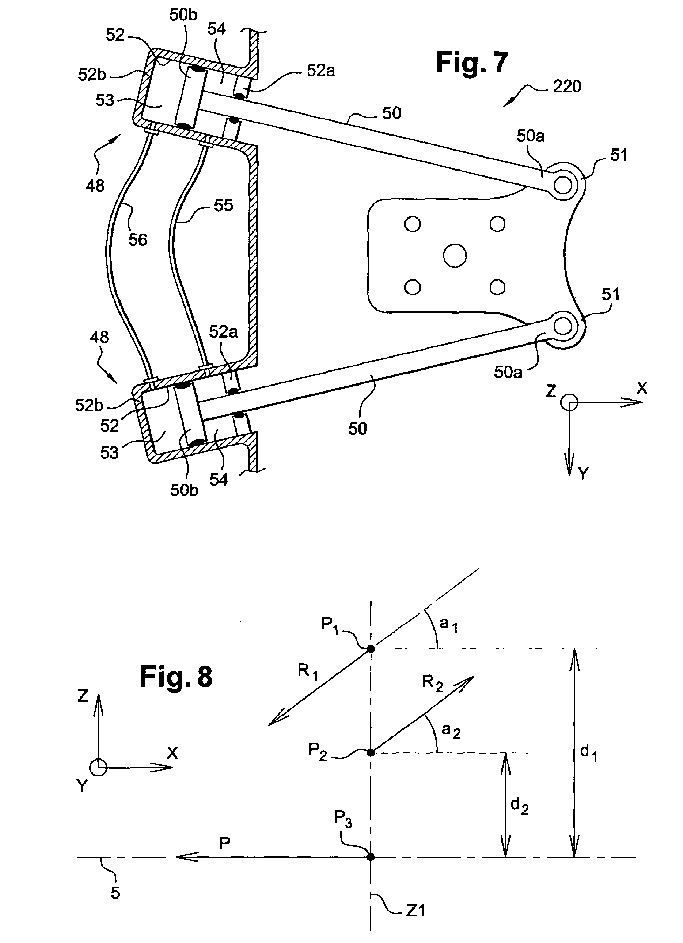

En référence à présent plus spécifiquement aux figures 6 et 7, on voit que chacun des vérins latéraux 48, qui sont de préférence identiques et donc disposés symétriquement par rapport au plan XZ passant par l'axe 5, présente une tige 50 se rapprochant de ce même plan XZ en allant vers le haut et vers l'arrière. Une extrémité arrière 50a de la tige 50 est montée sur un oreille à double tête 51 située au niveau d'une extrémité arrière du corps 17 de l'attache avant 16. Ainsi, l'extrémité arrière 50a peut être montée de façon articulée entre les deux têtes de l'oreille 51, par exemple à l'aide d'une rotule ou d'un axe (non référencé).

La tige 50 présente également une extrémité avant 50b prenant la forme d'un piston situé à l'intérieur d'une chambre 52 dans laquelle ce piston 50b est susceptible de se déplacer, la chambre 52 étant de préférence réalisée directement à l'intérieur de la portion supérieure 21 de la partie avant du carter central 22. Cette chambre 52 comporte alors un compartiment avant 53 et un compartiment arrière 54 séparés par le piston 50b, et dans lesquels se trouve un fluide tel que de l'huile. Au même titre que le piston 50b, la chambre 52 est alors de préférence cylindrique de section circulaire, et présente une paroi arrière cylindrique 52a traversée perpendiculairement et de façon étanche par la tige 50, ainsi qu'une paroi avant cylindrique 52b parallèle à la paroi 52a et au piston 50b.

En référence plus particulièrement à la figure 7, on voit que les compartiments arrière 54 sont connectés hydrauliquement, par exemple à l'aide d'une tuyauterie souple 55. Par conséquent, lorsque le moteur 2 exerce des efforts de poussée, la connexion hydraulique opérée implique que l'huile voit sa pression augmenter de manière identique dans les deux compartiments arrière 54, de sorte que les efforts repris respectivement par les deux tiges 50 et transmis à l'attache avant 16 sont aussi sensiblement égaux.

De la même façon, les compartiments avant 53 sont aussi connectés hydrauliquement, toujours à l'aide d'une tuyauterie souple 56. Ainsi, l'effet de palonnier horizontal procuré par les vérins latéraux 48 peut également être assuré lorsque le moteur 2 fonctionne en mode inversion de poussée.

A nouveau en référence à la figure 6, on peut voir que le dispositif à piston hydraulique 49 comporte un piston 57 situé à l'intérieur d'une chambre 58 dans laquelle ce piston 57 est susceptible de se déplacer, la chambre 58 étant de préférence réalisée directement à l'intérieur de la portion supérieure 21 de la partie avant du carter central 22. Cette chambre 58 comporte alors un compartiment avant 59 et un compartiment arrière 60 séparés par le piston 57, et dans lesquels se trouve un fluide identique à celui prévu dans les chambres 52. Au même titre que le piston 57, la chambre 58 est alors de préférence cylindrique de section circulaire, et présente une paroi arrière cylindrique 58a traversée perpendiculairement et de façon étanche par une tige de piston 61, ainsi qu'une paroi avant cylindrique 58b parallèle à la paroi 58a et au piston 57.

Par ailleurs, en se référant à la direction verticale Z et en considérant le dispositif de reprise 220 en vue de côté, il est noté que le piston 57 du dispositif 49 se situe au-dessus des pistons 50b des vérins 48. Ainsi, toujours en se référant à la même vue, les efforts exercés par la pression du fluide situé dans la chambre 58 sont situés au-dessus des efforts exercés par la pression du fluide situé dans les chambres 52.

Dans ce troisième mode de réalisation préféré de la présente invention, la rotule 19 de l'attache avant 16 est montée sur un axe 62 orienté selon la direction X, cet axe 62 étant lui-même solidaire du corps 17 de l'attache 16. A cet égard, le piston 57 est monté solidairement sur l'axe 62 par l'intermédiaire de la tige de piston 61 agencée dans le prolongement de ce dernier, et est situé à l'avant de cet axe 62, sensiblement perpendiculairement à la direction X.

En d'autres termes, le piston 57 est de préférence susceptible d'être déplacé selon la direction X à l'intérieur de la chambre 58, contrairement aux pistons 50b des vérins 48 qui sont respectivement susceptibles de se déplacer selon les directions des tiges 50 associées, à savoir selon des directions se rapprochant du plan XZ passant par l'axe 5 en allant vers l'arrière et vers le haut.

Comme cela sera explicité de façon détaillée ci-dessous, pour annuler le couple d'axe transversal appliqué au moteur 2 et lié aux efforts de poussée, le compartiment avant 59 de la chambre 58 est connecté hydrauliquement aux deux compartiments arrière 54 de la chambre 52, de préférence à l'aide de tuyauteries souples 63. De cette façon, à chaque instant, la pression du fluide régnant à l'intérieur du compartiment avant 59 est sensiblement identique à la pression du fluide régnant à l'intérieur des compartiments arrière 54.

De plus, il est précisé que pour obtenir le même effet d'annulation du couple d'axe transversal lorsque le moteur 2 fonctionne en mode inversion de poussée, il est prévu des tuyauteries souples 64 connectant hydrauliquement le compartiment arrière 60 de la chambre 58 et les deux compartiments avant 53 des chambres 52.

En référence à la figure 8, on peut effectivement voir un diagramme de force montrant qu'il est possible d'annuler le couple d'axe transversal s'appliquant sur le moteur 2 durant les phases de croisière, en dimensionnant judicieusement les vérins 48 et le dispositif à piston hydraulique 49.

Sur ce diagramme comportant la projection des divers efforts sur le plan vertical XZ passant par l'axe 5, on peut tout d'abord noter la présence des efforts de poussée symbolisés par la flèche P, ces efforts étant orientés vers l'avant selon la direction X.

Par ailleurs, la flèche R1 symbolise les efforts de pression exercés par le fluide contenu dans la chambre 58 du dispositif 49, et la flèche R2 symbolise la somme des efforts de pression exercés par le fluide contenu dans les deux chambres 52 des vérins latéraux 48.

Ces efforts R1 et R2 sont orientés respectivement vers l'arrière et vers l'avant, selon des angles a1 et a2 par rapport à la direction X. Il est noté que le sens opposé des efforts R1 et R2 est tout simplement obtenu à l'aide de la connexion hydraulique décrite précédemment, à savoir la connexion entre d'une part le compartiment avant 59 de la chambre 58, et d'autre part les compartiments arrière 54 des deux chambres 52.

A titre indicatif, il est précisé que l'angle a1 est nul dans le cas du troisième mode de réalisation préféré représenté sur les figures 5 à 7. De plus, les points d'application P1 et P2 des efforts R1 et R2 sont situés respectivement à des distances d1 et d2 de l'axe 5 sur une ligne verticale Z1 passant également par un point P3 correspondant au point d'application des efforts de poussée. Naturellement, il est à comprendre que le positionnement vertical des points P1 et P2 par rapport au point P3 ainsi que la valeur des angles a1 et a2 sont fonctions de la géométrie globale du dispositif de reprise 220.

Par conséquent, pour que le couple d'axe transversal appliqué au moteur 2 soit annulé, il suffit que les valeurs des trois efforts impliqués P, R1 et R2 vérifient le système d'équations suivant, dont l'équation (a) correspond à la somme des moments appliqués au point P3 et dont l'équation (b) correspond à la somme des moments appliqués au point P1 :

```
R1.cos(a1).d1 - R2.cos(a2).d2 = 0
```

```
R2.cos(a2).(d1-d2) = P.d1
```

De ce système d'équations, il ressort donc clairement que le rapport entre R1 et R2 est constant, indépendant de P, et uniquement lié à la géométrie globale du dispositif de reprise 220.

En effet, le rapport susmentionné vérifie l'équation (c) suivante :

```
R2/R1 = (cos(a1).d1)/(cos(a2).d2)
```

De cette façon et comme indiqué ci-dessus, il suffit simplement de dimensionner les vérins 48 et le dispositif 49 de sorte qu'un rapport k correspondant à R1/R2 vérifie l'équation (c), pour que le couple d'axe transversal s'appliquant sur le moteur 2 soit annulé, et ce quelle que soit la valeur des efforts de poussée durant les phases de croisière.

A ce titre, si Φ1 est le diamètre du piston 57 et Φ2 le diamètre de chacun des deux pistons 50b, alors les valeurs de ces diamètres seront choisies de manière à ce qu'elles vérifient l'équation (d) suivante :

$$(d) \quad \Phi2 = \Phi1.\sqrt{(k/2)}$$

Bien entendu, il est noté que lorsque les diamètres Φ2 et Φ1 vérifient l'équation (d), ils permettent également d'obtenir une annulation du couple d'axe transversal lorsque le moteur fonctionne dans le mode inversion de poussée, notamment grâce aux tuyauteries souples 64 connectant hydrauliquement d'une part le compartiment arrière 60 de la chambre 58, et d'autre part les compartiments avant 53 des deux chambres 52.

Dans ce troisième mode de réalisation préféré, le compartiment avant 59 de la chambre 58 est connecté hydrauliquement uniquement aux compartiments arrière 54 des vérins 48, de même que chacun des deux compartiments arrière 54 de la chambre 52 est connecté hydrauliquement uniquement au compartiment avant 59 de la chambre 58. En d'autres termes, le compartiment avant 59, les compartiments arrière 54 et les tuyauteries souples 63 constituent un ensemble fermé à l'intérieur duquel le fluide peut circuler librement. De plus, excepté lors des opérations de remplissage et de vidange des éléments 59, 54 et 63, aucun fluide extérieur ne peut pénétrer dans cet ensemble, et le fluide contenu dans celui-ci ne peut s'en échapper.

Il est par ailleurs noté que les propriétés relatives à l'ensemble 59,54,63 qui vient d'être décrit sont de préférence également valables pour l'ensemble constitué du compartiment arrière 60, des compartiments avant 53 et des tuyauteries souples 64.

Ainsi, lorsque l'aéronef se trouve dans une phase de croisière et que le moteur 2 exerce des efforts de poussée P, le fluide contenu à l'intérieur des deux compartiments arrière 54 voit sa pression augmenter jusqu'à ce qu'il atteigne une valeur « Vp » nécessaire pour contrer ces efforts P, cette valeur étant la même dans les deux compartiments 54 en raison de la connexion hydraulique opérée. L'augmentation de la pression est due à la compression du fluide, ce qui engendre des efforts R2 sur la paroi arrière 52a des chambres 52.

Simultanément, le fluide situé à l'intérieur du compartiment avant 59 atteint la même pression « Vp » que celle du fluide situé à l'intérieur des compartiments arrière 54, toujours en raison des connexions hydrauliques réalisées. De cette façon, le fluide présent dans le compartiment avant 59 permet de générer les efforts R1 sur la paroi avant 58b de la chambre 58. Et, comme indiqué précédemment, la géométrie et le dimensionnement du dispositif de reprise 220 impliquent que ces efforts R1 résultant de la pression « Vp » sont tels qu'ils permettent de contrer les efforts de poussé P, et tels qu'ils assurent également l'annulation du couple d'axe transversal conjointement à l'aide des efforts R2.

Enfin, on peut noter que dans ce troisième mode de réalisation préféré de la présente invention, la mesure de la différence de pression du fluide entre les compartiments avant et arrière de l'une des chambres 52,58 permettrait de déterminer les efforts de pression exercés par le moteur 2, en raison de la relation de proportionnalité existant entre ces données.

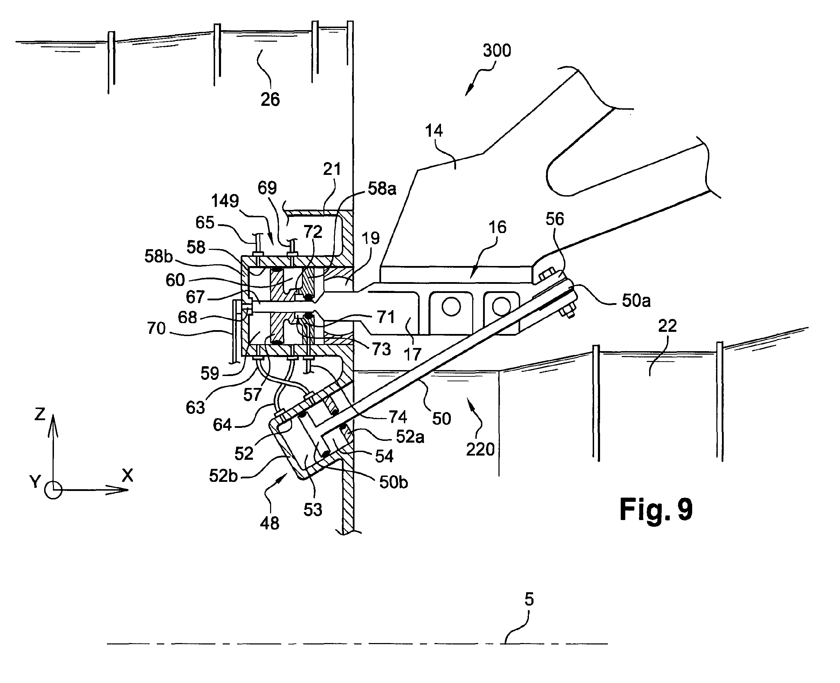

En référence à présent à la figure 9, on voit un système de montage 300 selon un quatrième mode de réalisation préféré de la présente invention, ce système de montage 300 étant largement similaire au système de montage 200 du troisième mode de réalisation préféré décrit ci-dessus.

On peut en effet s'apercevoir que dans ce quatrième mode de réalisation préféré de la présente invention, seul le dispositif à piston hydraulique 149 diffère par rapport au dispositif 49 du troisième mode de réalisation préféré.

En effet, le dispositif 149 reprend tous les éléments du dispositif 49, et incorpore de plus d'autres éléments supplémentaires qui vont à présent être décrits.

Le compartiment avant 59 est connecté hydrauliquement aux compartiments arrière 54, mais également à une alimentation hydraulique haute pression 65. Cette alimentation 65 alimente de façon continue le compartiment avant 59 en fluide, à une pression supérieure à la pression permettant de contrer les efforts de poussée maximum que peut générer le moteur 2.

D'autre part, le compartiment avant 59 dispose d'un orifice de fuite 68, par exemple situé sur la paroi avant 58b de la chambre 58, et dont l'accès est apte à être autorisé/interdit par un organe 67 solidaire du piston 57. Cet organe 67, situé en regard de l'orifice de fuite 68, est effectivement susceptible de libérer ou d'obturer cet orifice 68 respectivement en rompant le contact avec la paroi avant 58b et en entrant en contact avec cette même paroi, et ce en fonction de la position du piston 57 dans la chambre 58. En d'autres termes, l'accès à l'orifice de fuite 68 est interdit/autorisé par l'organe 67 en fonction de la pression hydraulique régnant à l'intérieur du compartiment avant 59, ainsi qu'en fonction des efforts de poussée générés par le moteur 2. De préférence et comme cela est visible sur la figure 9, l'organe 67 peut prendre la forme d'un axe centré par rapport au piston 57 et situé à l'avant de celui-ci.

Ainsi, en fonctionnement, la forte pression du fluide fourni par l'alimentation 65 implique que le piston 57 se déplace vers l'arrière en emmenant avec lui l'organe 67, ce qui entraîne alors la libération de l'orifice de fuite 68. Une partie du fluide sort donc du compartiment 59 par cet orifice 68, puis se dirige vers un circuit de fuite 70 qui est de préférence connecté hydrauliquement à l'alimentation haute pression 65. Par conséquent, la libération de l'orifice de fuite 68 engendre simultanément une diminution de la pression du fluide à l'intérieur du compartiment 59 qui devient très faible, ce qui entraîne un retour du piston 57 vers l'avant. De plus, ce déplacement vers l'avant du piston 57 est stoppé par l'entrée en contact de l'organe 67 avec la paroi avant 58b qui provoque une nouvelle obturation de l'orifice de fuite 68. Ensuite, en raison de la présence de l'alimentation haute pression 65 et de l'obturation de l'orifice 68, la pression à l'intérieur du compartiment 59 augmente, et le piston 57 est alors à nouveau déplacé vers l'arrière lorsque cette pression dépasse la pression nécessaire à contrer les efforts de poussée instantanés générés par le moteur 2.

De cette manière, le mouvement de va-et-vient permanent décrit par le piston 57 permet d'avoir une pression de fluide à l'intérieur du compartiment 59 qui soit à chaque instant la pression juste nécessaire pour contrer les efforts de poussée s'exerçant à ce même instant. La mesure de cette pression autoriserait donc la détermination des efforts de poussée instantanés, toujours en raison de la relation de proportionnalité existant entre ces données.

Il est précisé que la fonctionnalité qui vient d'être décrite peut également être prévue pour le mode inversion de poussée.

Pour ce faire, de façon analogue à celle présentée ci-dessus, le compartiment arrière 60 est alors connecté hydrauliquement à une alimentation hydraulique haute pression 69. Cette alimentation 69 alimente de façon continue le compartiment arrière 60 en fluide, à une pression supérieure à la pression permettant s'opposer aux efforts de contre-poussée maximum que peut générer le moteur 2.

D'autre part, le compartiment 60 dispose d'un orifice de fuite 71, par exemple situé sur la paroi arrière 58a de la chambre 58, et dont l'accès est apte à être autorisé/interdit par un organe 72 solidaire du piston 57. Comme cela est visible sur la figure 5, cet organe 72 peut prendre la forme d'une couronne d'axe parallèle à la direction X, qui lorsqu'elle est en contact avec la paroi 58a, définit une enceinte fermée 73 inaccessible au fluide se trouvant dans le compartiment arrière 60, cette enceinte 73 communiquant par ailleurs avec l'orifice de fuite 71. En revanche, lorsque le piston 57 se déplace vers l'avant, le contact entre l'organe 72 et la paroi arrière 58a est rompu, de sorte que le fluide peut alors pénétrer dans l'enceinte 73 et s'échapper par l'orifice de fuite 71 en direction d'un circuit de fuite 74, qui est aussi de préférence connecté hydrauliquement à l'alimentation haute pression 69, indépendante de l'alimentation haute pression 65. De préférence et comme cela est visible sur la figure 9, l'organe 72 est bien entendu situé à l'arrière du piston 57.

Il est noté que les alimentations haute pression 65 et 69 peuvent chacune fonctionner à l'aide d'une pompe à engrenage montée sur une boîte d'accessoires du moteur 2, ce type de pompe étant préféré en ce sens qu'il peut assurer de très forte pression sous faible débit.

Par ailleurs, il est noté que les organes 67 et 72 peuvent avantageusement remplir la fonction de butées mécaniques en cas de fuite hydraulique, respectivement en coopération avec les paroi 58b et 58a de la chambre 58.

D'autre part, même si cela n'apparaît par sur la figure 9, les organes 67 et 72 ne sont en évidence pas simultanément en contact respectivement avec les parois 58b et 58a. En effet, il est prévu un jeu adapté de sorte que lorsque l'un des organes 67,72 est en contact avec sa paroi associée 58b, 58a, l'autre organe est situé à distance de sa paroi associée. Par conséquent, lorsque l'accès à l'un des orifices 68,71 est interdit, l'accès à l'autre orifice est autorisé. A ce titre, il est indiqué que le jeu prévu est suffisamment petit pour que lors du montage, les organes 67 et 72 assurent un bon positionnement du moteur 2 par rapport au mât 6, dans la direction longitudinale X.

De plus, ce jeu est tel que durant le mouvement de va-et-vient décrit par le piston 57 lors d'un fonctionnement du moteur 2 en mode normal de poussée, l'accès à l'orifice 68 est toujours autorisé, de sorte que la pression du fluide régnant à l'intérieur du compartiment 60 reste toujours très faible, voire nulle. Bien évidemment, cette constatation est également valable pour l'accès à l'orifice 71 lorsque le moteur 2 fonctionne en mode inversion de poussée.

Enfin, il est indiqué que les alimentations haute pression 65 et 69 ainsi que les orifices de fuite 68 et 71 auraient également pu être agencés au niveau de l'une des deux chambres 52 des vérins latéraux 48, sans sortir du cadre de l'invention.

Bien entendu, diverses modifications peuvent être apportées par l'homme du métier aux systèmes de montage 1, 100, 200 et 300 ainsi qu'au mât d'accrochage 6 qui viennent d'être décrits, uniquement à titre d'exemples non limitatifs.

**Revendications**

1. Ensemble moteur pour aéronef comprenant un moteur (2), un mât d'accrochage (6) du moteur (2) fixé sous une voilure (8) de l'aéronef, ledit mât d'accrochage (6) comprenant un système de montage (1,100,200,300) interposé entre ledit moteur (2) et une structure rigide (4) de ce mât d'accrochage (6), le système comprenant une attache avant (16), une attache arrière (18) ainsi qu'un dispositif (20,120,220) de reprise des efforts de poussée générés par le moteur (2), ledit système comportant en outre des moyens additionnels (23,123) aptes à s'opposer à la flexion longitudinale du moteur (2),
   **caractérisé en ce que** les moyens additionnels (23,123) comportent au moins une bielle (32,132) apte à s'opposer à la flexion longitudinale du moteur (2), chaque bielle (32,132) étant raccordée d'une part à la structure rigide (4) du mât (6) et d'autre part à un carter de soufflante (26) du moteur (2), de manière à être sollicitée qu'à partir d'un niveau de déformation prédéterminé de ce moteur (2).

**2.** Ensemble selon la revendication 1, **caractérisé en ce que** chaque bielle (32,132) est raccordée à l'aide d'une attache souple (34) à au moins l'un des éléments pris parmi le groupe constitué du carter de soufflante (26) du moteur (2) et de la structure rigide (4) du mât (6).

**3.** Ensemble selon la revendication 1 ou la revendication 2, **caractérisé en ce que** chaque bielle (32,132) est raccordée à une partie supérieure arrière du carter de soufflante (26) du moteur (2).

**4.** Ensemble selon l'une quelconque des revendications précédentes, **caractérisé en ce que** lesdits moyens additionnels (23) comportent une unique bielle (32) apte à s'opposer à la flexion longitudinale du moteur (2) .

**5.** Ensemble selon l'une quelconque des revendications précédentes, **caractérisé en ce que** lesdits moyens additionnels (123) comportent deux bielles (132) aptes à s'opposer à la flexion longitudinale du moteur (2).

**6.** Ensemble selon l'une quelconque des revendications précédentes, **caractérisé en ce que** le dispositif de reprise des efforts de poussée (20) comporte deux bielles latérales (28) disposées de part et d'autre d'un carter central (22) du moteur (2), chaque bielle latérale (28) étant raccordée d'une part à une partie avant dudit carter central (22) du moteur (2), et d'autre part à l'une desdites attaches avant (16) et arrière (18) du système.

**7.** Ensemble selon l'une quelconque des revendications 1 à 5, **caractérisé en ce que** le dispositif de reprise des efforts de poussée (120) comprend un palonnier (27) disposant d'un bras supérieur (29) et de deux bras inférieurs latéraux (31), les bras supérieur et inférieurs latéraux (29,31) étant solidaires et pourvus respectivement d'une extrémité supérieure (29b) ainsi que de deux extrémités inférieures latérales (31a) du palonnier (27), les deux extrémités inférieures latérales (31a) étant placées de façon à être traversées par un plan horizontal passant par un axe longitudinal (5) du moteur (2), le dispositif (120) de reprise des efforts de poussée étant également muni de deux ferrures (44) situées de part et d'autre du moteur (2) et comprenant chacune une extrémité avant (44a) également traversée par le plan horizontal passant par l'axe longitudinal (5) du moteur (2) et solidarisée à une partie avant d'un carter central (22) du moteur, ainsi qu'une extrémité arrière (44b) raccordée à l'une des deux extrémités inférieures latérales (31a) du palonnier (27), et **en ce que** ledit palonnier (27) est également raccordé à l'attache avant (16) du système de montage, ainsi qu'à la structure rigide (4) du mât d'accrochage (6) par l'intermédiaire de son extrémité supérieure (29b).

**8.** Ensemble selon la revendication 7, **caractérisé en ce que** ledit palonnier (27) est raccordé à l'attache avant (16) par l'intermédiaire d'au moins un axe rotulé (33) orienté selon une direction transversale (Y) de l'aéronef.

**9.** Ensemble selon la revendication 7 ou la revendication 8, **caractérisé en ce que** l'extrémité supérieure (29b) du bras supérieur (29) est raccordée à la structure rigide (4) du mât d'accrochage (6) à l'aide d'une bielle (35).

**10.** Ensemble selon la revendication 9, **caractérisé en ce que** ladite bielle (35) est orientée sensiblement selon une direction longitudinale (X) de l'aéronef.

**11.** Ensemble selon l'une quelconque des revendications 7 à 10, **caractérisé en ce que** chacune des extrémités arrière (44b) des deux ferrures (44) solidaires de la partie avant du carter central (22) du moteur (2) est raccordée à l'une des deux extrémités inférieures latérales (31a) du palonnier (27) à l'aide d'une biellette (46).

**12.** Ensemble selon l'une quelconque des revendications 1 à 5, **caractérisé en ce que** le dispositif de reprise des efforts de poussée (220) comprend deux vérins latéraux (48) disposés de part et d'autre du moteur (2), chaque vérin (48) disposant d'une tige (50) dont une extrémité arrière (50a) est raccordée à l'une desdites attache avant (16) et attache arrière (18) et dont une extrémité avant (50b) est un piston situé à l'intérieur d'une chambre (52) solidaire d'une partie avant d'un carter central (22) du moteur (2), ladite chambre (52) comportant un compartiment avant (53) et un compartiment arrière (54) séparés par ledit piston (50b) ;
et **en ce que** ledit dispositif de reprise (220) comporte en outre un dispositif à piston hydraulique (49, 149) comportant un piston (57) solidaire de l'attache avant (16) et situé à l'intérieur d'une chambre (58) solidaire de ladite partie avant du carter central (22) du moteur (2), ladite chambre (58) comportant un compartiment avant (59) et un compartiment arrière (60) séparés par ledit piston (57), ledit compartiment avant (59) de ladite chambre (58) du dispositif à piston hydraulique (49,149) étant connecté hydrauliquement auxdits compartiments arrière (54) des vérins latéraux (48).

**13.** Ensemble selon la revendication 12, **caractérisé en ce que** ledit compartiment arrière (60) de ladite chambre (58) du dispositif à piston hydraulique (49,149) est connecté hydrauliquement auxdits compartiments avant (53) des vérins latéraux (48).

**14.** Ensemble selon la revendication 12 ou la revendication 13, **caractérisé en ce que** lesdits compartiments avant (53) des deux vérins latéraux (48) sont connectés hydrauliquement, et **en ce que** lesdits compartiments arrière (54) des ces deux vérins latéraux (48) sont également connectés hydrauliquement.

**15.** Ensemble selon l'une quelconque des revendications 12 à 14, **caractérisé en ce que** lesdites chambres (52,58) sont pratiquées à l'intérieur de la partie avant du carter central (22) du moteur (2).

**16.** Ensemble selon l'une quelconque des revendications 12 à 15, **caractérisé en ce que** l'extrémité arrière (50a) de chacune des deux tiges (50) est connectée à ladite attache avant (16).

**17.** Ensemble selon l'une quelconque des revendications 12 à 16, **caractérisé en ce que** le compartiment avant (59) de la chambre (58) du dispositif à piston hydraulique (49) est connecté hydrauliquement uniquement aux compartiments arrière (54) des vérins latéraux (48).

**18.** Ensemble selon l'une quelconque des revendications 12 à 16, **caractérisé en ce que** ledit compartiment avant (59) du dispositif à piston hydraulique (149) est également connecté hydrauliquement à une alimentation hydraulique haute pression (65) et dispose d'au moins un orifice de fuite (68) dont l'accès est apte à être autorisé/interdit par un organe (67) solidaire dudit piston (57), en fonction de la pression hydraulique régnant à l'intérieur du compartiment avant (59), ainsi qu'en fonction des efforts de poussée générés par le moteur (2).

**19.** Ensemble selon la revendication 18, **caractérisé en ce que** ledit compartiment arrière (60) du dispositif à piston hydraulique (149) est également connecté hydrauliquement à une alimentation hydraulique haute pression (69) et dispose d'au moins un orifice de fuite (71) dont l'accès est apte à être autorisé/interdit par un organe (72) solidaire dudit piston (57), en fonction de la pression hydraulique régnant à l'intérieur du compartiment arrière (60), ainsi qu'en fonction des efforts de contre-poussée générés par le moteur (2).

**20.** Ensemble selon l'une quelconque des revendications précédentes, **caractérisé en ce que** ladite attache avant (16) est solidaire d'une partie avant d'un carter central (22) du moteur (2) et d'une extrémité avant d'une pyramide (14) constituant une partie avant de la structure rigide (4) du mât (6), et **en ce que** ladite attache arrière (18) est solidaire d'une partie arrière du carter central (22) du moteur (2) et de la structure rigide (4) du mât (6) .

**Claims**

**1.** Aircraft engine assembly incorporating an engine (2), an attachment strut (6) of engine (2) fixed beneath an aircraft wing (8), said attachment strut (6) incorporating a mounting system (1, 100, 200, 300) inserted between an aircraft engine (2) and a rigid structure (4) of an attachment strut (6) fixed under a wing (8) of this aircraft, the system including a forward mount (16), an aft mount (18) and a device (20, 120, 220) for resisting thrusts generated by the engine (2), said system also comprising additional means (23, 123) for opposing the longitudinal bending of the engine (2), **characterized in that** the additional means (23, 123) comprise at least one connecting rod (32, 132) capable of opposing longitudinal bending of the engine (2), each connecting rod (32, 132) being connected firstly to the rigid structure (4) of the strut (6) and secondly to a fan casing (26) of the engine (2), so that it is only stressed starting from a predetermined deformation level of this engine (2).

**2.** Assembly according to claim 1, **characterized in that** each connecting rod (32, 132) is connected to at least one of the elements taken from among the group consisting of the fan casing (26), the engine (2) and the rigid structure (4) of the strut (6) through a flexible mount (34).

**3.** Assembly according to claim 1 or claim 2, **characterized in that** each connecting rod (32, 132) is connected to an aft upper part of the engine (2) fan casing (26).

**4.** Assembly according to any one of the above claims, **characterized in that** said additional means (23) comprise only one connecting rod (32) for opposing the longitudinal bending of the engine (2).

**5.** Assembly according to any one of the above claims, **characterized in that** said additional means (123) comprise two connecting rods (132) for opposing the longitudinal bending of the engine (2).

6.  Assembly according to any one of the above claims, **characterized in that** the thrust resistance device (20) comprises two lateral connecting rods (28) arranged on each side of a central casing (22) of the engine (2), each lateral connecting rod (28) being connected firstly to a forward part of the central casing (22) of the engine (2), and secondly to one of said forward (16) and aft (18) mounts of the system.

7.  Assembly according to any one of claims 1 to 5, **characterized in that** the thrust resistance device (120) comprises a spreader beam (27) provided with an upper arm (29) and two lateral lower arms (31), the upper and lateral lower arms (29, 31) being fixed and fitted with an upper end (29b) and two lateral lower ends (31a) of the spreader beam (27), the two lateral lower ends (31a) being placed such that a horizontal plane passes through them an through a longitudinal axis (5) of the engine (2), the thrust resistance device (120) also being fitted with two fittings (44) on each side of the engine (2) and each comprising a forward end (44a) through which the horizontal plane passing through the longitudinal axis (5) of the engine (2) also passes, and fixed to a forward part of a central casing (22) of the engine, and an aft end (44b) connected to one of the two lateral lower ends (31a) of the spreader beam (27), and **in that** said spreader beam (27) is also connected to the forward mount (16) of the mounting system, and to the rigid structure (4) of the attachment strut (6) through its upper end (29b).

8.  Assembly according to claim 7, **characterized in that** said spreader beam (27) is connected to the forward mount (16) through at least one swivel pin (33) oriented along a transverse direction (Y) of the aircraft.

9.  Assembly according to claim 7 or claim 8, **characterized in that** the upper end (29b) of the upper arm (29) is connected to the rigid structure (4) of the attachment strut (6) using a connecting rod (35).

10. Assembly according to claim 9, **characterized in that** said connecting rod (35) is oriented approximately along a longitudinal direction (X) of the aircraft.

11. Assembly according to any one of claims 7 to 10, **characterized in that** each of the aft ends (44b) of the two fittings (44) fixed to the forward part of the central casing (22) of the engine (2) is connected to one of the two lateral lower ends (31a) of the spreader beam (27) using a connecting rod (46) .

12. Assembly according to any one of claims 1 to 5, **characterized in that** the thrust resistance device (220) comprises two lateral actuators (48) arranged one on each side of the engine (2), each actuator (48) being provided with a rod (50) in which the aft end (50a) is connected to one of said forward (16) and aft (18) mounts for which a forward end (50b) is a piston located inside a chamber (52) fixed to a forward part of a central casing (22) of the engine (2), said chamber (52) comprising a forward compartment (53) an an aft compartment (54) separated by said piston (50b); and **in that** said thrust resistance device (220) also comprises a hydraulic piston device (49, 149) comprising a piston (57) fixed to the forward mount (16) and located inside a chamber (58) fixed to said forward part of the central casing (22) of the engine (2), said chamber (58) comprising a forward compartment (59) and an aft compartment (60) separated by said piston (57), said forward compartment (59) of said chamber (58) of the hydraulic piston device (49, 149) being hydraulically connected to said aft compartments (54) of the lateral actuators (48).

13. Assembly according to claim 12, **characterized in that** said aft compartment (60) of said chamber (58) of the hydraulic piston device (49, 149) is hydraulically connected to said forward compartments (53) of the lateral actuators (48).

14. Assembly according to claim 12 or claim 13, **characterized in that** said forward compartments (53) of the two lateral actuators (48) are hydraulically connected, and **in that** said aft compartments (54) of these two lateral actuators (48) are also hydraulically connected.

15. Assembly according to any one of claims 12 to 14, **characterized in that** said chambers (52, 58) are formed inside the forward part of the central casing (22) of the engine (2).

16. Assembly according to any one of claims 12 to 15, **characterized in that** the aft end (50a) of each of the two rods (50) is connected to said forward mount (16) .

17. Assembly according to any one of claims 12 to 16, **characterized in that** the forward compartment (59) of the chamber (58) of the hydraulic piston device (49) is hydraulically connected only to the aft compartments (54) of the lateral actuators (48).

18. Assembly according to any one of claims 12 to 16, **characterized in that** said forward compartment (59) of the hydraulic piston device (149) is also hydraulically connected to a high pressure hydraulic supply (65) and is provided with at least one leak orifice (68) for which access can be enabled/disabled by a device (67) fixed to said piston (57), as a function of the hydraulic pressure inside the forward compartment (59), and as a function of thrusts generated by the engine (2).

19. Assembly according to claim 18, **characterized in that** said aft compartment (60) of the hydraulic piston device (149) is also hydraulically connected to a high pressure hydraulic supply (69) and is provided with at least one leak orifice (71) for which access can be enabled/disabled by a device (72) fixed to said piston (57), as a function of the hydraulic pressure inside the aft compartment (60), and as a function of reverse thrusts generated by the engine (2)

20. Assembly according to any one of the above claims, **characterized in that** said forward mount (16) is fixed to a forward part of a central casing (22) of the engine (2) and a forward end of a pyramid (14) forming a forward part of the rigid structure (4) of the strut (6), and **in that** said aft mount (18) is fixed to an aft part of the central casing (22) of the engine (2) and the rigid structure (4) of the strut (6).

**Patentansprüche**

1. Triebwerkeinheit für ein Luftfahrzeug, mit einem Triebwerk (2), einem Aufhängungsmast (6) des Triebwerks (2), der unter einem Tragwerk (8) des Luftfahrzeugs befestigt ist, wobei der Aufhängungsmast (6) ein Montagesystem (1,100, 200,300) umfaßt, das zwischen das Triebwerk (2) und eine starre Struktur (4) dieses Aufhängungsmast (6) eingefügt ist, wobei das System eine vordere Befestigung (16), eine hintere Befestigung (18) sowie eine Vorrichtung (20,120,220) zur Aufnahme von durch das Triebwerk (2) erzeugten Schubkräften aufweist, und das System außerdem zusätzliche Mittel (23,123) umfaßt, die sich der Longitudinalbiegung des Triebwerks (2) widersetzen können, **dadurch gekennzeichnet, dass** die zusätzlichen Mittel (23,123) mindestens eine Kurbelstange (32,132) umfassen, die sich der Longitudinalbiegung des Triebwerks (2) widersetzen kann, wobei jede Kurbelstange (32,132) einerseits mit der starren Struktur (4) des Masts (6) und andererseits mit einem Gebläsegehäuse (26) des Triebwerks (2) derart verbunden ist, dass sie nur ab einem vorbestimmten Verformungsniveau dieses Triebwerks (2) beansprucht werden kann.

2. Einheit nach Anspruch 1, **dadurch gekennzeichnet, dass** jede Kurbelstange (32,132) mittels einer nachgiebigen bzw. elastischen Befestigung (34) mit mindestens einem der Elemente verbunden ist, die aus der aus dem Gebläsegehäuse (26) des Triebwerks (2) und der starren Struktur (4) des Masts (6) gebildeten Gruppe ausgewählt sind.

3. Einheit nach Anspruch 1 oder 2, **dadurch gekennzeichnet, dass** jede Kurbelstange (32,132) mit einem hinteren oberen Abschnitt des Gebläsegehäuses (26) des Triebwerks (2) verbunden ist.

4. Einheit nach einem der vorangehenden Ansprüche, **dadurch gekennzeichnet, dass** die zusätzlichen Mittel (23) eine einzelne Kurbelstange (32) umfassen, die sich der Longitudinalbiegung des Motors (2) widersetzen kann.

5. Einheit nach einem der vorangehenden Ansprüche, **dadurch gekennzeichnet, dass** die zusätzlichen Mittel (123) zwei Kurbelstangen (132) umfassen, die sich der Longitudinalbiegung des Triebwerks (2) widersetzen können.

6. Einheit nach einem der vorangehenden Ansprüche, **dadurch gekennzeichnet, dass** die Vorrichtung zur Aufnahme von Schubkräften (20) zwei laterale Kurbelstangen (28) umfaßt, die auf beiden Seiten eines zentralen Gehäuses (22) des Triebwerks (2) angeordnet sind, wobei jede laterale Kurbelstange (28) einerseits mit einem vorderen Abschnitt des zentralen Gehäuses (22) des Triebwerks (2) und andererseits mit einer der vorderen (16) und hinteren (18) Befestigungen des Systems verbunden ist.

7. Einheit nach einem der Ansprüche 1 bis 5, **dadurch gekennzeichnet, dass** die Vorrichtung zur Aufnahme von Schubkräften (120) ein Ausgleichsgestänge (27) umfaßt, das über einen oberen Arm (29) und zwei untere laterale Arme (31) verfügt, wobei die oberen und unteren lateralen Arme (29,31) fest miteinander verbunden bzw. einstückig sind und jeweils mit einem oberen Ende (29b) sowie mit zwei unteren lateralen Enden (31a) des Ausgleichsgestänges (27) versehen sind, wobei die beiden unteren lateralen Enden (31a) derart angeordnet sind, dass sie von einer Horizontalebene durchsetzt sind, die durch eine Longitudinalachse (5) des Triebwerks (2) hindurchgeht, und die Vorrichtung (120) zur Aufnahme von Schubkräften auch mit zwei Beschlagteilen (44) ausgestattet ist, die sich auf beiden Seiten des Triebwerks (2) befinden und jeweils ein vorderes Ende (44a), das ebenfalls von der durch die Longitudinalachse (5) des Triebwerks (2) hindurchgehenden Horizontalebene durchsetzt ist, und mit einem vorderen Abschnitt eines zentralen Gehäuses (22) des Triebwerks einstückig bzw. fest verbunden ist, sowie ein hinteres Ende (44b), das mit einem der unteren lateralen Enden (31a) des Ausgleichsgestänges (27) verbunden ist, aufweisen, und dass das Ausgleichsgestänge (27) auch mit der vorderen Befestigung (16) des Montagesystems sowie mit der starren Struktur (4) des Aufhängungsmasts (6) über sein oberes Ende (29b) verbunden ist.

8. Einheit nach Anspruch 7, **dadurch gekennzeichnet, dass** das Ausgleichsgestänge (27) mit der vorderen Befestigung (16) über mindestens eine Kugelgelenkachse (33) verbunden ist, die in einer Transversalrichtung (Y) des Luftfahrzeugs ausgerichtet ist.

9. Einheit nach Anspruch 7 oder 8, **dadurch gekennzeichnet, dass** das obere Ende (29b) des oberen Arms (29) mit der starren Struktur (4) des Aufhängungsmasts (6) mit Hilfe einer Kurbelstange (35) verbunden ist.

10. Einheit nach Anspruch 9, **dadurch gekennzeichnet, dass** die Kurbelstange (35) im wesentlichen in einer Longitudinalrichtung (X) des Luftfahrzeugs ausgerichtet ist.

11. Einheit nach einem der Ansprüche 7 bis 10, **dadurch gekennzeichnet, dass** jedes der hinteren Enden (44b) der zwei Beschlagteile (44), die mit dem vorderen Abschnitt des zentralen Gehäuses (22) des Triebwerks (2) einstückig bzw. fest verbunden sind, mit einem der beiden unteren lateralen Enden (31a) des Ausgleichsgestänges (27) mittels einer Kurbel (46) verbunden ist.

12. Einheit nach einem der Ansprüche 1 bis 5, **dadurch gekennzeichnet, dass** die Vorrichtung zur Aufnahme von Schubkräften (220) zwei laterale Zylinder (48) umfaßt, die auf beiden Seiten des Triebwerks (2) angeordnet sind, wobei jeder Zylinder (48) mit einer Stange (50) versehen ist, deren hinteres Ende (50a) mit der vorderen Befestigung (16) oder der hinteren Befestigung (18) verbunden ist, und von dem ein vorderes Ende (50b) ein Kolben ist, der sich im Innern einer Kammer (52) befindet, die mit einem vorderen Abschnitt eines zentralen Gehäuses (22) des Triebwerks (2) einstückig bzw. fest verbunden ist, wobei die Kammer (52) ein vorderes Fach (53) und ein hinteres Fach (54) umfaßt, die durch den Kolben (50b) getrennt sind, und

dass die Vorrichtung zur Aufnahme (von Kräften) (220) außerdem eine Hydraulikkolbenvorrichtung (49,149) aufweist, die einen mit der vorderen Befestigung (16) einstückigen bzw. fest verbundenen und im Inneren einer mit dem vorderen Abschnitt des zentralen Gehäuses (22) des Triebwerks (2) einstückigen bzw. fest verbundenen Kammer (58) gelegenen Kolben (57) umfaßt, wobei die Kammer (58) ein vorderes Fach (59) und ein hinteres Fach (60) aufweist, die durch den Kolben (57) getrennt sind, und das vordere Fach (59) der Kammer (58) der Hydraulikkolbenvorrichtung (49,149) hydraulisch mit den hinteren Fächern (54) der lateralen Zylinder (48) verbunden ist.

13. Einheit nach Anspruch 12, **dadurch gekennzeichnet, dass** das hintere Fach (60) der Kammer (58) der Hydraulikkolbenvorrichtung (49,149) hydraulisch mit den vorderen Fächern (53) der lateralen Zylinder (48) verbunden ist.

14. Einheit nach Anspruch 12 oder 13, **dadurch gekennzeichnet, dass** die vorderen Fächer (53) der beiden lateralen Zylinder (48) hydraulisch verbunden sind und dass die hinteren Fächer (54) der beiden lateralen Zylinder (48) ebenfalls hydraulisch verbunden sind.

15. Einheit nach einem der Ansprüche 12 bis 14, **dadurch gekennzeichnet, dass** die Kammern (52,58) im Inneren des vorderen Abschnitts des zentralen Gehäuses (22) des Triebwerks (2) ausgebildet sind.

16. Einheit nach einem der Ansprüche 12 bis 15, **dadurch gekennzeichnet, dass** das vordere Ende (50a) jeder der zwei Stangen (50) mit der vorderen Befestigung (16) verbunden ist.

17. Einheit nach einem der Ansprüche 12 bis 16, **dadurch gekennzeichnet, dass** das vordere Fach (59) der Kammer (58) der Hydraulikkolbenvorrichtung (49) lediglich mit den hinteren Fächern (54) der lateralen Zylinder (48) hydraulisch verbunden ist.

18. Einheit nach einem der Ansprüche 12 bis 16, **dadurch gekennzeichnet, dass** das vordere Fach (59) der Hydraulikkolbenvorrichtung (149) ebenfalls mit einer hydraulischen Hochdruck-Speiseleitung (65) hydraulisch verbunden ist und über mindestens eine Ablassöffnung (68) verfügt, deren Zugang von einem mit dem Kolben (57) einstückigen bzw. fest verbundenen Element (67) zugelassen/unterbunden werden kann, und zwar als Funktion des im Inneren des vorderen Fachs (59) herrschenden Hydraulikdrucks sowie als Funktion der von dem Triebwerk (2) erzeugten Schubkräfte.

**19.** Einheit nach Anspruch 18, **dadurch gekennzeichnet, dass** das hintere Fach (60) der Hydraulikkolbenvorrichtung (149) auch mit einer hydraulischen Hochdruckspeiseleitung (69) hydraulisch verbunden ist und über mindestens eine Ablassöffnung (71) verfügt, deren Zugang durch ein mit dem Kolben (57) einstückiges bzw. fest verbundenes Element (72) zugelassen/unterbunden werden kann, und zwar als Funktion des im Innern des hinteren Fachs (60) herrschenden Hydraulikdrucks sowie als Funktion der von dem Triebwerk (2) erzeugten Gegenschubkräfte.

**20.** Einheit nach einem der vorangehenden Ansprüche, **dadurch gekennzeichnet, dass** die vordere Befestigung (16) mit einem vorderen Abschnitt eines zentralen Gehäuses (22) des Triebwerks (2) einstückig bzw. fest verbunden ist, sowie mit einem vorderen Ende einer Pyramide (14), die einen vorderen Abschnitt der starren Struktur (4) des Masts (6) bildet, und dass die hintere Befestigung (18) mit einem hinteren Abschnitt des zentralen Gehäuses (22) des Triebwerks (2) sowie mit der starren Struktur (4) des Masts (6) einstückig bzw. fest verbunden ist.

Fig.1

**Fig. 2a**

**Fig. 2b**

**Fig. 2c**

Fig. 3

EP 1 571 081 B1

Fig. 4

Fig. 5

EP 1 571 081 B1

Fig. 6

**Fig. 7**

**Fig. 8**

Fig. 9